# EUROPEAN PATENT SPECIFICATION

(11) **EP 0 652 235 B1**
(45) Date of publication and mention of the grant of the patent: **29.12.1997**
(21) Application number: 94116518.5
(22) Date of filing: 20.10.1994
(51) Int. Cl.: C08F 6/10

(54) **Process for purifying polymer**
Verfahren zur Reinigung von Polymeren
Procédé de purification de polymères

(30) Priority: 09.11.1993 JP 279862/93
(43) Date of publication of application: 10.05.1995
(73) Proprietor: MITSUBISHI GAS CHEMICAL COMPANY, INC., Tokyo, 100 (JP)
(72) Inventor: Higuchi, Yasushi, c/o Mitsubishi Gas Chem. Co. Inc, Hiratsuka-shi, Kanagawa-ken (JP); Kuwahara, Shojiro, c/o Mitsubishi Gas Chem. Co.Inc, Hiratsuka-shi, Kanagawa-ken (JP); Hieda, Shinichi, c/o Mitsubishi Gas Chem. Co.Inc, Hiratsuka-shi, Kanagawa-ken (JP); Kurokawa, Masahiro, c/o Mitsubishi Gas Chem.Co.Inc, Hiratsuka-shi, Kanagawa-ken (JP)
(74) Representative: Türk, Gille, Hrabal, Leifert

(56) References cited:
- AU-B- 534 454
- PATENT ABSTRACTS OF JAPAN vol. 11, no. 297 (C-448) (2744) 25 September 1987 & JP-A-62 089 710 (ASAHI CHEM. IND. CO. LTD.) 24 April 1987

## Description

### BACKGROUND OF THE INVENTION

### (i) Field of the Invention

The present invention relates to a process for purifying a polymer, and more specifically, it relates to a process for purifying a polymer by efficiently removing volatile components such as unreacted monomers and a solvent from a polymer composition obtained by a solution polymerization process or the like.

### (ii) Description of the Related Art

In recent years, methacrylate polymers having excellent characteristics in points of transparency, weathering resistance and surface gloss have widely been used in various applications such as car parts, light electric parts, optical materials, and materials for lights, signs and displays. Heretofore, usually as a manufacturing method for methacrylic resin molding materials, a suspension polymerization method has been used, but this method inconveniently involves some problems such as the contamination of a polymer and the complication of a washing step and a waste water treatment step. Accordingly, much attention has nowadays been paid to a solution polymerization method as an excellent process from the viewpoints of economy and product quality.

In this solution polymerization method, a devolatilization step is essential where volatile components such as unreacted monomers and a solvent which remain in a polymerization solution are removed after the completion of the polymerization. In such a method for removing the volatile components from the polymer composition, the polymer composition is generally heated to a high temperature, and then introduced into a vacuum atmosphere to evaporate and separate the volatile components therefrom. This method is suitable for mass production on an industrial scale, because it permits the treatment of a large amount of the polymer composition at once.

As one example of this method, Japanese Patent Publication No. 29797/1978 has reported a method which comprises heating a polymer solution by the use of a multitubular type heat exchanger, and then flushing the heated solution with bubbles into a devolatilizing tank in which pressure is reduced, thereby removing volatile components therefrom.

In this method, it is necessary that the polymer composition is beforehand sufficiently heated for the purpose of lowering the concentration of the remaining volatile components in the obtained polymer. Furthermore, the polymer composition flushed into the devolatilizing tank foams due to the evaporation of the volatile components, and at this time, owing to cooling by evaporation latent heat, the viscosity of the polymer composition increases, so that the separation of the volatile components is liable to become poor. In order to prevent this inconvenience, the polymer composition is heated again in the devolatilizing tank to maintain its fluidity and simultaneously the polymer is continuously taken out through the bottom of the devolatilizing tank by a gear pump or the like. In the flush operation and the takeout operation, a part of the polymer unavoidably splashes to adhere to the wall surface of the devolatilizing tank or stagnates on the bottom of the devolatilizing tank. Thus, the polymer is exposed to the above-mentioned operation conditions, i.e., the high temperature for a long period of time, so that deterioration by heat tends to occur. In addition, another problem is the contamination of the polymer with dust present on the liquid contact surface of the gear pump or an oil for a mechanical seal. In the methacrylate polymer particularly characterized by transparency, even slight deterioration or contamination gives rise to coloring, which easily causes the deterioration of quality.

As described in Japanese Patent Application Laid-open No. 172401/1989, in the solution polymerization for the methacrylic polymer, an alkylbenzene such as toluene is usually often used as a solvent. However, it is difficult to remove the volatile components from the polymer composition after the polymerization, if the pressure in the devolatilizing tank is not maintained at an absolute pressure of about 150 Torr or less. However, in order to maintain this vacuum degree, the vapor of the evaporated and separated volatile components must be rapidly taken out of the devolatilizing tank, and it is also necessary to condense the vapor of the low-pressure volatile components by a heat exchanger to efficiently collect them. In consequence, the load of a vacuum device and freezing facilities increases, which is economically disadvantageous.

In Japanese Patent Application Laid-open No. 281504/1991, a devolatilizing tank equipped with a gear pump for takeout having a specific structure is used, and a polymer composition is fed to an engaging portion between gears of the gear pump, while its rotational speed is controlled, to intend an efficient devolatilizing operation. However, in order to treat a great deal of the polymer composition, the large specific gear pump is required and the cost of the facilities increases. In addition, since a liquid contact area and a stagnation portion also increase, and so the influence of contamination and deterioration by heat on the product cannot be neglected.

Moreover, Japanese Patent Publication No. 29914/1976 has disclosed a method in which a polymer composition is heated to a high temperature, and then directly blown into the feed screw of a vent extruder to evaporate volatile components. However, also in this method, the large vent extruder is required, which increases the cost of the facilities. In addition, since the volume of an evaporating portion is small, it can be presumed that the polymer composition treatment ability of the vent extruder is limited, and so this method is not always suitable for mass production.

In Japanese Patent Application Laid-open No. 89710/1987, another method is disclosed in which a methacrylate polymer composition is heated to a high temperature, cast and dropped into a devolatilizing tank having a space in its upper portion to remove volatile components, and then fed to a vent extruder to lower the content of the remaining volatile components to 1% by weight or less. In this method, however, the polymer composition is beforehand heated up to a high temperature of 200°C or more, and the vent extruder having a high devolatility performance is required to be used. Thus, the problems of the deterioration of the polymer by heat and the increase in the cost of the facilities are not solved yet.

### SUMMARY OF THE INVENTION

An object of the present invention is to provide a process for purifying a polymer by efficiently removing volatile components from a polymer composition without deterioration such as coloring.

The present inventors have found the following fact. When a polymer composition containing a specific low-boiling solvent is discharged under substantially atmospheric pressure after the heating of the polymer composition with or without the introduction of an inert gas, a liquid film having a large surface area can be formed in the vicinity of the exit, whereby a large evaporation area is secured. As a result, most of the volatile components can efficiently be removed from the polymer composition, and when this polymer is fed to a vent extruder and then extruded thereby, a high-quality polymer which can be used as a molding material can be manufactured without deterioration such as coloring. The present invention has been completed on the basis of this knowledge.

That is to say, according to the present invention, there is provided a process for purifying a polymer by separating and removing volatile components from a polymer composition containing the volatile components which comprises:
(a) a step of heating the polymer composition containing at least one solvent selected from the group consisting of methanol and acetone to a temperature of 120-270°C by a heater;
(b) a step of discharging the heated polymer composition into a tank in which the pressure is maintained at 0.3-1.9 atm, and then separating and collecting most of the volatile components; and
(c) a step of feeding the obtained polymer composition to a vent extruder in which the temperature is set to 180-270°C and the pressure in the vent portion is set to 1-400 Torr, and then extruding it to lower the content of the remaining volatile components in the composition to 1% by weight or less.

Alternatively, between the above-mentioned steps (b) and (c), there can be interposed a step (b') of introducing an inert gas into the polymer composition before heating or under heating, or into the vicinity of the polymer composition which is being discharged into the tank.

In any case, the internal pressure at the inlet of the heater must be at least 15 kg/cm².

### BRIEF DESCRIPTION OF THE DRAWINGS

Figs. 1 and 2 are each a schematic flow sheet of a device used in the practice of a process of the present invention .

Figs. 3 and 4 are each a schematic flow sheet of a polymer manufacturing process in accordance with a continuous solution polymerisation method to which a process of the present invention is applied.

Figs. 5 and 6 are each a schematic flow sheet of an embodiment in which a solvent such as methanol is added to and mixed with a polymerisation solution drawn in a polymer manufacturing process in accordance with a continuous bulk polymerisation method.

Fig. 7 shows a vent plug as one embodiment of a flush nozzle used.

As far as quantities are given within this specification in the units "atm", "Torr", "Kg/cm²", and "inch", these units may be converted using the following conversion factors. Atm to Bar: X 1,01325, Torr to Bar: X 0,0013332, Kg/cm² to Bar: X 0,98067, and Inch to m: X 0,254.

### DESCRIPTION OF PREFERRED EMBODIMENTS OF THE INVENTION

In the present invention, volatile components in a polymer composition are derived from monomers, a solvent and/or by-products. Here, the solvent is preferably methanol, or acetone, and methanol is more preferable. Methanol and acetone can be used singly or in a combination of the two kinds. Since these solvents have the following features, the efficient separating operation of the volatile components has become possible.
(1) These solvents easily evaporate at a low boiling point, and when the polymer composition is heated, the solvents can maintain the same at a high pressure and accelerate foaming in a discharge step.
(2) They can each form a low-boiling mixture like an azeotrope with the methacrylate or the acrylate monomer to accelerate the evaporation of the monomer components.
(3) They have a polymer dissolving power enough to maintain the uniformity of the polymer composition in a wide concentration range at the time of heating.
(4) when the polymer composition containing these solvents is cooled, the solubility of the volatile components in the polymer rapidly decreases, so that the volatile components are easily separated from the polymer and the polymer becomes less adhesive to the inside walls of a device and pipes.

In detail, the polymer composition may be heated to a temperature of 150-250 °C, and then discharged through a flush nozzle into a tank in which pressure is maintained at 0.5-1.5 atm. This embodiment of the invention is applicable generally, and also when working with an inert gas according to claim 10.

The polymer composition can be discharged directly from the exit of the heater into the tank, but usually a nozzle is used.

As a nozzle attached to an outlet in a tank into which the polymer composition is discharged, various valves and dies for use in extruders can be used. Examples of the valves include various kinds of valves such as a needle valve, a purge valve, a vent plug and a diehead valve, which can be used to take out the polymer from a polymerisation vessel, and examples of the dies include a strand die for granulation, various flat dies (T-dies) for sheets such as a manifold die, a fishtail die, a coathanger die and a screw die, various circular dies for tubes such as a straight die, a crosshead die and an offset die, and various inflation dies for bag making such as a spider type, a spiral type and a lower support type. They may be used singly or in a combination of two or more thereof. These flush nozzles generate a pressure difference between a heater side and a tank side to maintain a pressurizing state in the heater and to prevent a rapid foaming devolatilization from reaching the inside of the heater, thereby heightening the heat exchange ability of the heater. In addition, the flush nozzle enlarges the surface area of the flushed polymer composition to accelerate the evaporation and separation of the volatile components. The polymer composition discharged through the flush nozzle flows down vertically at a constant flow rate in the tank, and so it neither scatters nor splashes, so that the polymer composition can be prevented from adhering to the inside wall of the tank, with the result that the polymer composition can be formed into a predetermined sectional shape and then stably fed to the extruder. When the strand die or the valve is used, the opening diameter of its pore or orifice is selected in the range of 0.5 to 15 mm, preferably 1 to 10 mm. The slit or gap of the other die preferably has a width of 0.3 to 8 mm. If the opening diameter is too small, such an excessive pressure difference as to be in excess of the pressure resistance limit of the heater is generated, which is dangerous, and if it is too large, the foaming devolatilization reaches the inside of the heater, so that it is difficult to carry out the stable flush operation. The systematic values of the flush nozzle are decided in consideration of an optimum devolatilization effect and economy in compliance with the amount of the polymer composition to be discharged.

Here, the term "devolatilization" means that the volatile components are removed by evaporation from the polymer.

The flush nozzle may be arranged on either position of the upper flange and the inside of the tank, but this flush nozzle is required to be arranged as close as possible to the exit of the heater so as to be sufficiently warmed. When arranged in the tank, this flush nozzle can be arranged close to the feed portion of the extruder installed under the tank, whereby the flushed polymer composition can be directly blown against the screw of the extruder.

The polymer composition is discharged into an atmosphere having a pressure in the vicinity of atmospheric pressure in the range of 0.3 to 1.9 atm, preferably 0.5 to 1.5 atm in the tank. If the pressure atmosphere is more than 1.9 atm, the evaporation rate of volatile components such as the methacrylate monomer and the solvent contained in the polymer composition is low, so that the separation of the volatile components is insufficient. If it is less than 0.3 atm, a large-scale vacuum device and freezer are required to collect the low-boiling volatile components and to maintain the vacuum degree in the tank, and this is not economical. In order to avoid the deterioration of the polymer, an atmosphere comprising an inert gas such as a nitrogen gas and/or the vapor of the volatile components constituting the polymer composition is desirable, and for the purpose of accelerating the takeout of the volatile component vapor, the inert gas can be introduced into the tank and caused to flow therein. In this case, inert gases such as nitrogen and carbon dioxide can be used, but nitrogen is particularly preferable. The volatile components evaporated and separated from the polymer composition are usually taken out of the tank by an exhaust system such as an ejector, a blower or a vacuum pump, and then led into a condenser in which the volatile components are cooled, condensed and collected. Furthermore, most of a noncondensable gas such as the inert gas introduced at this time can also be collected through the exhaust system, returned to the tank by the blower, and then circularly used.

In the present invention, when desired, the inert gas can be introduced into the polymer composition, but the inert gas to be introduced is the gas which neither reacts with nor deteriorates the polymer composition even at a high temperature during the devolatilizing operation. Examples of the inert gas include nitrogen, carbon dioxide, argon, helium, methane, ethane and propane, but particularly preferable is nitrogen. This inert gas is introduced into the tank at a flow rate necessary to maintain the flushed polymer composition in a suitable foaming state. If the flow rate is too high, the pressure at the feed opening of the heat exchanger for heating the polymer composition rises to exceed the pressure resistance limit of the device on occasion, which is dangerous, and the polymer splashes and adheres to the wall of the device at the time of the flush operation to clog a discharge opening for the volatile vapor, with the result that the stable running operation becomes difficult. If the flow rate is too low, the separation of the volatile components from the flushed polymer composition is liable to be insufficient. No particular restriction is put on the amount of the inert gas to be introduced, so long as the above-mentioned problems do not take place, but in general, the flow rate of the inert gas is preferably 1 to 500 times as much as the volume flow rate of the polymer composition.

An introduction site of the inert gas is arranged in the polymer composition before the heating or under the heating or in the vicinity of the polymer composition which is being discharged into the tank, and at a position where the foaming of the polymer composition can effectively be accelerated. For example, the following introduction manner is effective. When the inflation die is used at an outlet, the inert gas is introduced into an attached gas introducing portion for inflation; when the circular die is used, it is introduced into the central portion of the die; or when the valve or a die other than the above-mentioned dies is used, it is directly introduced into the polymer composition immediately before the flush operation.

If the polymer composition which contains a specific solvent and has a sufficient pressure and which is heated to a temperature enough to give fluidity is discharged into an atmosphere having a pressure in the vicinity of the atmospheric pressure, the low-boiling components in the polymer composition first rapidly evaporate in the vicinity of a discharge opening and the polymer jets while foaming. With this jet, other volatile components in the polymer composition, mainly the monomers also evaporate simultaneously, so they are easily separated. In the case that the inert gas is introduced into the polymer composition at this time, a liquid film having a further large surface area is formed at the discharge opening to secure a large evaporation area, whereby the volatile components in the polymer composition can be more effectively separated and removed. Therefore, even if the heating temperature of the polymer composition is set to a level lower than in the case that the inert gas is not introduced, the volatile components can be removed in a similar ratio, and hence the polymer having a high quality can be manufactured without suffering deterioration by heat.

The pressurizing state in the heater has a large influence on the separation of the volatile components at the time of the flush operation, and thus, when the pressure at the feed opening of the heater is maintained at 3 to 60 kg/cm², preferably 7 to 40 kg/cm², the volatile components can be effectively devolatilized from the polymer composition.

The polymer composition discharged into the tank is cooled by the evaporation latent heat of the volatile components and the flowing inert gas to become a high-viscosity state, while foaming. At this time, the temperature in the tank is maintained in the range of 50 to 260°C, preferably 80 to 170°C. If the temperature is less than 50°C, the foaming polymer solidifies so rapidly that the volatile components are scarcely separated and the separated volatile components condense in the tank to make their removal difficult. If it is more than 260°C, the polymer is liable to bring about the deterioration by heat. The polymer can take an optional condition of from a solid state to a melting state in the tank in accordance with its properties and the heating temperature, but any condition is acceptable, so long as the takeout from the tank and the feed to the extruder can be stably performed. However, if the polymer completely solidifies, it forms bridges in the lower portion of the tank and clogging easily occurs, so that the feed to the extruder is impeded. On the other hand, if the polymer is in a highly fluid melting state, it flows and easily stagnates on the lower portion of the tank and the inside wall of the feed portion of the extruder to cause the deterioration by heat and contamination. For these reasons, the polymer preferably has a suitable flexibility and plasticity as well as characteristics by which the polymer scarcely adheres to the inside wall. This suitable temperature range can naturally be maintained by keeping a good thermal balance between discharge and takeout of the polymer composition, the inert gas and the volatile components in the tank, even if heating and cooling are not particularly given from the outside.

The concentration of the remaining volatile components in the polymer composition taken out of the tank is maintained in the range of 0.5 to 12% by weight, preferably 1 to 8% by weight, and in general, the polymer composition is then directly fed to the vent extruder. However, in the case that a crusher is installed in the tank, the polymer composition can be crushed, prior to its feed to the vent extruder.

As the extruder to be used, a usually designed vent extruder equipped with at least one front vent can be selected, and for example, single-screw and twin-screw vent extruders are preferable, but in compliance with a use purpose, an extruder equipped with a multi-stage front vent and/or a multi-stage rear vent can also be used. The L/D of the extruder is preferably in the range of about 20 to 40. Temperatures of the respective portions of the vent extruder can be set to levels suitable for the molding in accordance with a kind and a brand of polymer to be prepared, but in general, the temperatures of the vent portion and a barrel are maintained in the range of 160 to 280°C, preferably 180 to 250°C. The pressure in the vent portion is preferably in the range of 1 to 400 Torr, more preferably 50 to 200 Torr. Since most of the volatile components are separated and removed in the tank, the vent portion does not have to be maintained in a high vacuum state. The rotational speed of the screw is decided so that the residence time of the polymer composition in the vent extruder may be in the range of 1 to 30 minutes, preferably 2 to 15 minutes. Furthermore, additives such as an ultraviolet absorber, a lubricant, a stabilizer and a colorant can be mixed with the polymer by this extruder. The thus extruded polymer is cut by a pelletizer or a hot cut pelletizer to obtain the polymer containing 1% by weight or less, usually 0.5% by weight or less of the remaining volatile components which is usable as a molding material.

The heating temperature of the polymer composition depends upon the composition of the volatile components in the polymer composition and evaporation latent heat, but it is usually selected in the range of 120 to 270°C, preferably 150 to 260°C in view of the viscosity and the thermal stability of the polymer composition, more preferably 170 to 250°C. Moreover, the pressure in the heater depends upon the composition of the volatile components in the polymer composition, the heating temperature and the feed rate of the polymer composition, the amount of the inert gas to be introduced, and pressure loss by the heater and the flush nozzle, but no particular restriction is put on the pressure in the heater, so long as it does not exceed the pressure resistance limit of the heater, the die and the pipes.

As the heater for the polymer composition, a heat exchanger is usually used, and a multitubular heat exchanger, a plate fin type heat exchanger and a static mixer type heat exchanger are preferable, but a stirring tank or a horizontal reactor equipped with a screw or a stirrer may also be used. In order to avoid the heat deterioration of the polymer composition, the polymer composition is required to be heated up to a predetermined temperature in the shortest possible time, and the heat exchanger having a structure which permits an efficient heat exchange is desirable. This heater may be arranged on either position of the upper flange and the inside of the tank, but the heater is required to be arranged as close as possible to the tank so that the heated polymer composition may be rapidly flushed.

In the process of the present invention, the facilities can be more simplified as compared with a conventional method in which the polymer is molten in a high-temperature tank and then taken out therefrom by a gear pump or the like, and the use of a moderate operation temperature is also possible. In addition, heat history can be shortened and an area of the contact surface of the device with the polymer which causes contamination can be reduced. In consequence, the methacrylate polymer which hates the deterioration by heat and the contamination can be advantageously treated, inhibiting the coloring phenomenon, without impairing appearance. Moreover, the consumption of energy necessary for the collection of the volatile components under the reduced pressure, the retention of the vacuum state in the tank and the maintenance of the fluidity of the polymer can be reduced, and the power of facilities such as the vacuum device, the condenser and the extruder may be low. As a result, a utility unit and the cost of the facilities can be decreased, which permits the polymer to be economically advantageously manufactured.

The process of the present invention can be applied to various kinds of polymers, but typical examples of the applicable polymers include methyl methacrylate alone and copolymers which can be produced by polymerizing monomer mixtures of methyl methacrylate as a main component and the following monomers copolymerizable with methyl methacrylate. No particular restriction is put on the polymer composition, but it usually comprises 90 to 30% of the polymer and 5 to 55% by weight of the unreacted monomer components.

Examples of the monomers which can be copolymerized with methyl methacrylate include methyl acrylate, ethyl acrylate, propyl acrylate, butyl acrylate, cyclohexyl acrylate, ethyl methacrylate, propyl methacrylate, n-butyl methacrylate, cyclohexyl methacrylate, styrene and N-phenylmaleimide, and above all, a combination of methyl methacrylate and methyl acrylate, a combination of methyl methacrylate and n-butyl acrylate, a combination of methyl methacrylate and ethyl acrylate and a combination of methyl methacrylate and styrene are particularly preferable.

In order not to impair characteristics of the methacrylate polymer such as transparency and weathering resistance, the polymer preferably contains 50% by weight or more, more preferably 75 to 100% by weight of methyl methacrylate, but the copolymer of methyl methacrylate and styrene may be composed of 30 to 74% by weight of methyl methacrylate and 70 to 26% by weight of styrene.

The process for removing the volatile components according to the present invention can be applied, as a polymer separation step, to a polymer manufacturing process in accordance with a continuous solution polymerization method or a bulk polymerization method. In this case, however, as continuous preparation methods of the polymer composition, there can be considered, for example, (1) a method in which a mixture of monomer components containing methyl methacrylate and/or styrene as main components and a solvent such as methanol is continuously solution-polymerized in the presence of a polymerization initiator and a chain transfer agent, and (2) a method in which monomer components alone containing methyl methacrylate and/or styrene as main components, or a mixture of monomer components for copolymerization and a small amount of a solvent such as methanol is bulk-polymerized in the presence of a polymerization initiator and a chain transfer agent, and a solvent such as methanol is further added to and mixed with the resulting reaction product.

The polymer can be manufactured by any method, but the optimum composition and method should be selected in consideration of the monomer components, physicochemical properties of the produced polymer and some advantages of the process. In addition, the process of the present invention can also be applied to the treatment of the polymer compositions obtained by other various methods.

The polymer composition in the present invention contains the polymer, the monomer components and the solvent as the main components as well as the polymerization initiator, the chain transfer agent and components derived from additives which are added at the time of the polymerization. The polymerization solution of the above-mentioned solution polymerization method using methanol as the solvent may be directly treated, or a solvent such as methanol may be added to the polymerization solution of the bulk polymerization method or the solution polymerization method, prior to the treatment. No particular restriction is put on the composition of the polymer, and the composition depends upon situations and it cannot be fixedly determined, but the content of the polymer is usually in the range of 30 to 90% by weight. If the content of the polymer is more than 90% by weight, the polymer composition is very viscous, so that the movement and flow of the polymer composition in a pipe and the heater are difficult sometimes. If it is less than 30% by weight, the remaining volatile components in the obtained polymer increase and a production efficiency also deteriorates, which is impractical. The polymer composition contains 5 to 55% by weight, preferably 10 to 40% by weight of the monomer components. The polymer composition in which the content of the monomer components is less than 5% by weight can scarcely be obtained in fact, and if the content of the monomer components is more than 55% by weight, the amount of the remaining monomer components in the obtained polymer increases, which is not practical. Furthermore, the solvent is contained in the polymer composition in the range of 5 to 65% by weight, preferably 6 to 35% by weight. If the concentration of the solvent is less than 5% by weight, the remaining volatile components in the polymer increase, and if it is more than 65% by weight, the productivity declines, which is not efficient. This polymer composition is required to be maintained at a temperature at which the polymer composition has a uniform viscosity capable of giving fluidity thereto, and in the case that the solution polymerization using methanol is carried out, the polymer composition is preferably maintained in the vicinity of a polymerization temperature.

In the polymer composition for use in the present invention, a weight ratio of the monomer components to the solvent is usually in the range of 0.3 to 8, more preferably 0.5 to 4. If the weight ratio of the monomer components to the solvent is more than 4, the removal of the volatile components is insufficient, and the remaining volatile components in the polymer increase inconveniently.

Next, the present invention will be described in more detail with reference to attached drawings.

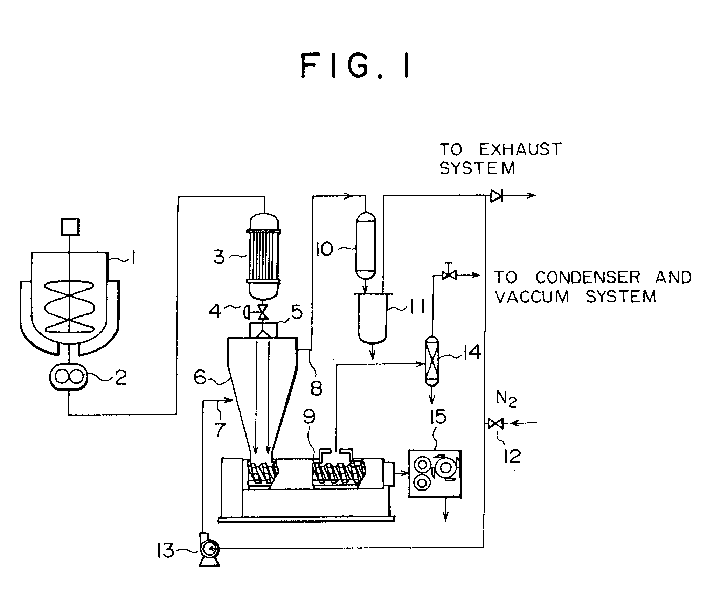

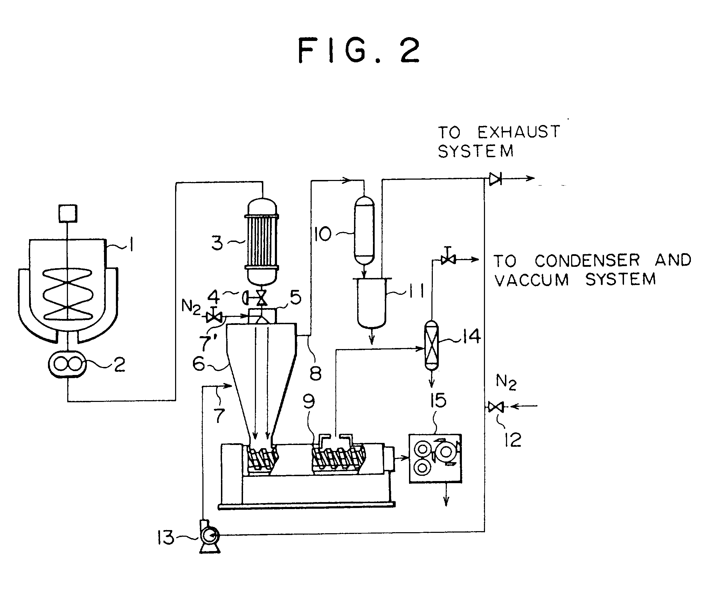

Figs. 1 and 2 are each a schematic flow sheet of a device used in the practice of a process of the present invention.

A polymer composition is prepared in a stirring tank 1, fed to a heater 3 at a predetermined flow rate by a metering pump 2, and then heated to a predetermined temperature. The exit of the heater is directly connected to a tank 6. Next, the polymer composition is flushed into the tank 6 through a flush nozzle 5, while the internal pressure of the heater and the discharge flow rate of the polymer composition are adjusted by a control valve 4. At this time, an inert gas (e.g., a nitrogen gas) can be introduced into the polymer composition through an inert gas inlet 7' of the flush nozzle 5 at a predetermined flow rate under pressure (see Fig. 2). Furthermore, an inert gas such as a nitrogen gas is also introduced into the tank 6 through an inlet 7 at a lower position of the tank, and the inert gas is caused to flow in the tank.

Evaporated volatile components are taken out together with the nitrogen gas through an exhaust vent 8 at an upper portion of the tank, condensed in a condenser 10, and then collected in a receiver 11. A part of the nitrogen gas is discharged from the system, but most of the nitrogen gas is returned to the tank 6 by a blower 13, and it is collected and circularly used in the system.

The jetted and foamed polymer flows down in the tank 6, introduced into a feed portion of a vent extruder 9 directly connected to the bottom of the tank 6, continuously extruded by the extruder 9, and then cut into pellets suitable for their use in various molding machines by a pelletizer 15. The volatile components separated in the vent extruder 9 are sucked through a vent hole by a vacuum system, and high-boiling components are then removed by a distillation column 14. Afterward, the volatile components are collected by a condenser, and then forwarded to a vacuum system. The nitrogen gas is fed through a valve 12, so that the system is maintained at a predetermined pressure.

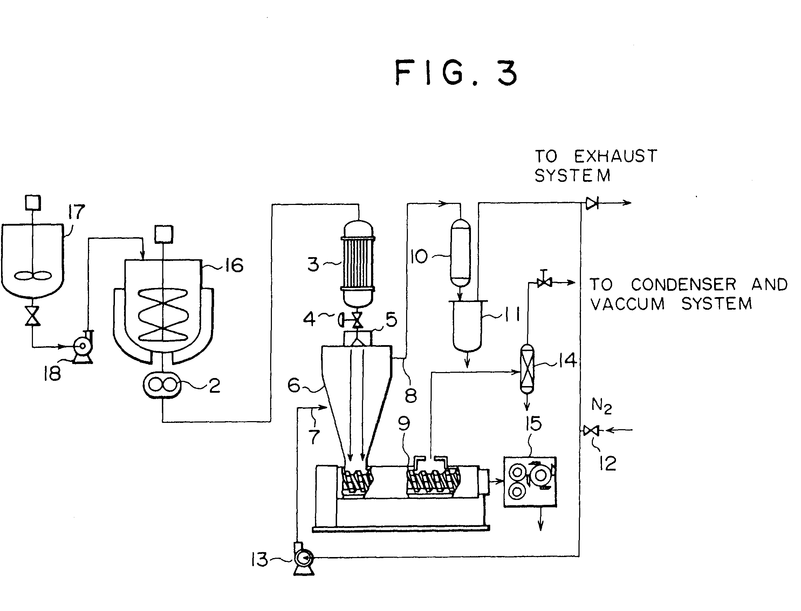

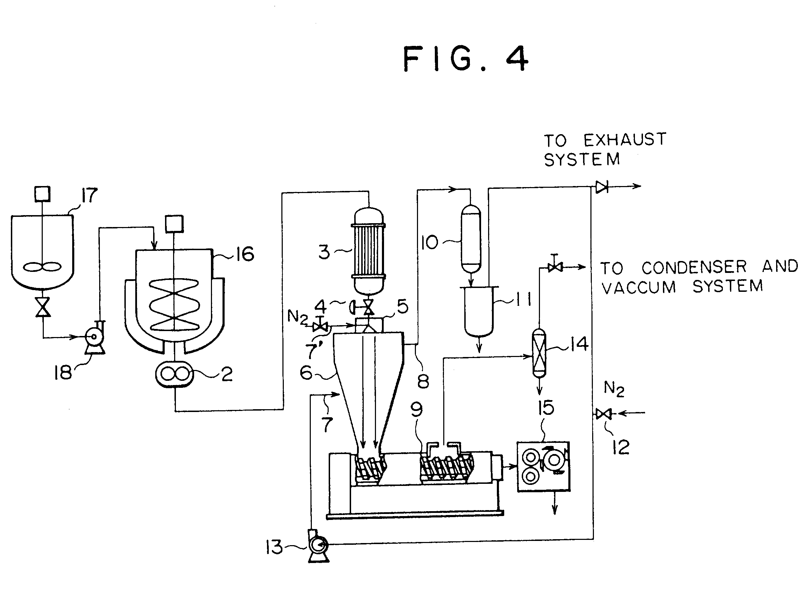

Figs. 3 and 4 are each a schematic flow sheet of a polymer manufacturing process in accordance with a continuous solution polymerization method in which a process of the present invention is applied. In this case, monomer components, a solvent such as methanol, a polymerization initiator and a chain transfer agent are blended in a blend tank 17 to prepare a material solution, and this material solution is then fed to a complete mixing polymerization reactor 16 at a constant flow rate by a metering pump 18, in which polymerization is continuously carried out. Next, this liquid polymerization product is drawn by the metering pump 2 and introduced into the heater 3, and it is then treated in the same manner as in Figs. 1 and 2 to continuously prepare the polymer.

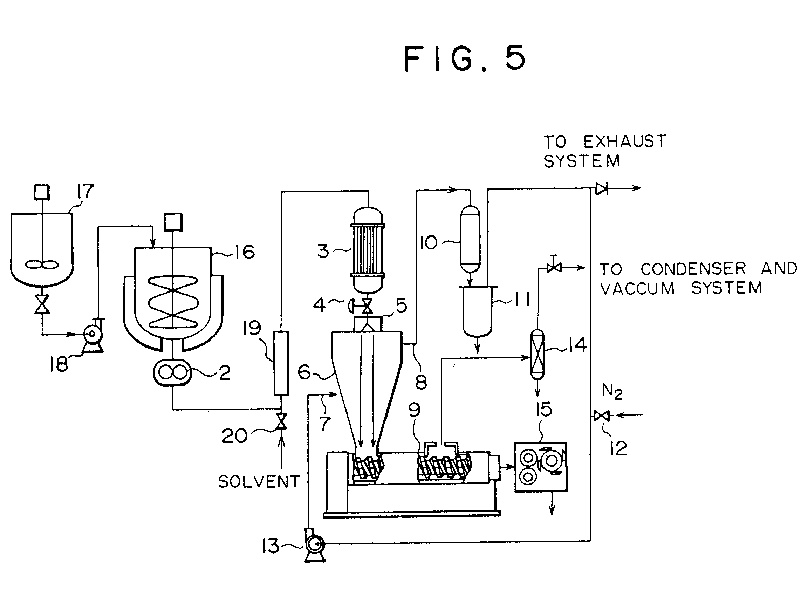

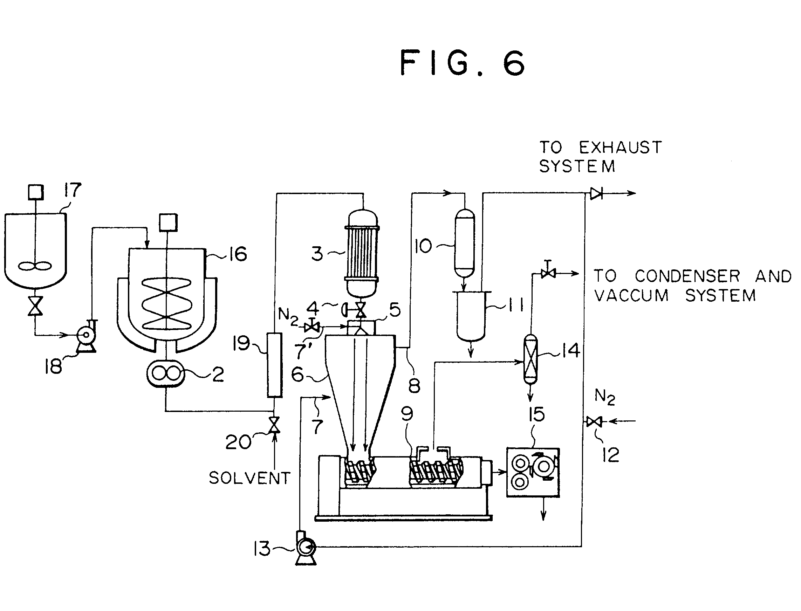

Figs. 5 and 6 show embodiments in which a solvent such as methanol is added to and mixed with a polymerization solution drawn in a polymer manufacturing process in accordance with a continuous bulk polymerization method. In this case, as shown in Figs. 3 and 4, monomer components, a polymerization initiator and a chain transfer agent are blended in the blend tank 17 to prepare a material solution, and this material solution is then fed to the complete mixing polymerization reactor 16 at a constant flow rate by the metering pump 18, in which polymerization is carried out. Next, this polymerization liquid is drawn by the metering pump 2, and a solvent such as methanol is continuously added through an injection inlet 20 to the liquid polymerization product. After uniformly mixed in a mixer 19, the polymerization liquid is introduced into the heater 3, and it is then treated in the same manner as in Figs. 1 and 2 to continuously prepare the polymer.

The temperature and the pressure in each section are changeable by an external heater and a pressure regulating valve, and the temperatures and the pressures of the polymer composition and the volatile components in each section are measured. The flow rate and the composition of the polymer composition to be fed are optionally changeable.

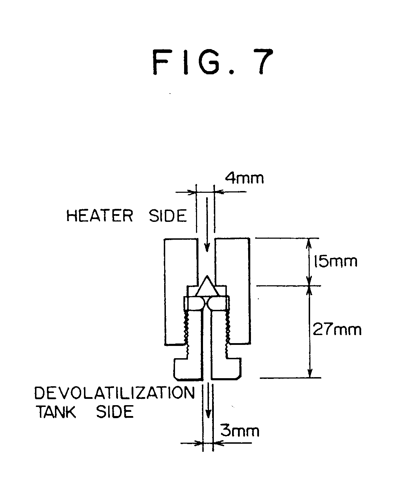

Fig. 7 shows a vent plug as one example of the used flush nozzle.

According to the present invention, a polymer composition containing a predetermined solvent such as methanol is heated and pressurized, and then discharged into an atmosphere having a pressure in the vicinity of atmospheric pressure through a flush nozzle, so that while volatile components are separated, a polymer can be taken out, whereby the polymer can be easily separated and purified, thereby preparing the high-quality polymer without modification such as coloring. In addition, the present invention permits the improvement of a devolatilization efficiency and the stable operation of the device for a long period of time.

Next, the present invention will be described in more detail with reference to examples, but the scope of the present invention should not be limited to these examples. In the examples, "part(s)" and "%" all mean "part(s) by weight" and "% by weight", respectively.

In the following examples, physical properties of polymers were measured by the following procedures.
(1) Volatile components contained in the polymer were analyzed by gas chromatography to determine their content.
(2) The total light transmission (%) of each molded article was measured in accordance with an ASTM D1003 method.

The specifications of main devices used in the examples are as follows.

Stirring tank and Polymerization tank: Diameter = 207 mm, length = 240 mm, bottom = half-ellipse mirror, net volume = 6 liters, made of SUS 316, and equipped with a heating medium circulating jacket and a Max blend blade.

Metering pump for transfer: Iwaki LD-112 type, maximum discharge rate = 70 cc/min, and discharge pressure = 16 kgf/cm² (50 Hz).

Heater: Noritake Static Mixer N60, diameter of an outside pipe with jacket = 3/4 inch, that of an inside pipe = 3/8 inch, and length = 430 mm.

Tank: Upper cylinder: diameter = 216 mm, and length = 148 mm
Lower cone: diameters = 216 mm and 70 mm, length = 274 mm, and equipped with a jacket, a condenser and a storage tank.

Gear pump for drawing: Zenith HPB type, 1.75 cc/rev., max 100 rpm, inlet = 3/8 inch, and outlet = 1/4 inch.

As flush nozzles, the following valves and dies were used.
(A) Vent plug: Opening diameter = 3.0 mm, length = 42 mm, and orifice diameter = 4.0 mm.
(B) Diehead valve: 3 holes, opening diameter = 3.0 mm, and orifice diameter = 6.0 mm.
(C) Strand die: Single hole, opening diameter = 2.5 mm, and length = 20 mm.
(D) T-die: Fishtail type, width = 25 mm, and space = 1.5 mm.
(E) Circular die: Spider type, and diameters 18 mm and 20 mm.

Extruder: Single shaft, diameter = 40 mm, L/D = 29, and equipped with one front vent.

### Example 1

In this example, a system shown in Fig. 1 was used. First, 5 kg of a methacrylate polymer composition containing 60.0 parts of poly(methyl methacrylate), 25.6 parts of methyl methacrylate, 1.1 parts of methyl acrylate and 13.3 parts of methanol was placed in a stirring tank 1. Next, the composition was fed to a heater 3 at a flow rate of 1 kg/hr by a metering pump 2, while maintained at 150°C, and then discharged through a flush nozzle 5 (a vent plug) into a tank 6 of a nitrogen gas atmosphere. The polymer composition was heated up to 200°C in the heater, and at this time, the pressure at an inlet of the heater was 25 kg/cm². A generated vapor of volatile components was taken out through an exhaust opening 8 at an upper position of the tank, passed through a condenser 10 in which the volatile components were condensed, and then collected in a storage tank (a receiver) 11. In this case, the collection of the volatile components was done at 0.37 kg/hr in a ratio of 93% of a theoretical amount, and in the volatile components, there were contained 63% of methyl methacrylate, 2.5% of methyl acrylate and 32.5% of methanol. While a noncondensable gas was returned to the tank 6 by a blower 13 and then circulated through the system, and the pressure in the system was maintained at 0.9 to 1.1 atm.

The flushed polymer was cooled to about 80°C in the tank 6, and then allowed to flow in a foaming strand state having an outer diameter of about 4 mm. In this polymer, there were contained 3.3% of methyl methacrylate, 0.14% of methyl acrylate and 0.03% of methanol as the remaining volatile components. This polymer was directly fed to the feed portion of a vent extruder 9 directly connected to the outlet of the tank 6, and the volatile components were further removed at a barrel temperature of 230°C and a vent vacuum degree of 150 Torr. Afterward, the polymer was cut by a pelletizer 14 to obtain pellets of the polymer. The vapor of the volatile components exhausted through the vent opening of the vent extruder 9 was led into a distillation column 14, in which high-boiling components were separated and removed, and the monomer components were then collected by a condenser. The remaining volatile components in the obtained polymer were 0.22% of methyl methacrylate and 0.01% of methyl acrylate, and the content of methanol was less than detection limit. The concentration of the total volatile components was 0.23%. The polymer had a total light transmission of 93% and a good appearance, i.e., a colorless transparent appearance.

### Examples 2 to 6

Polymer compositions having the same composition as in Example 1 were prepared and then subjected to a devolatilizing treatment under various conditions in a similar manner, and a vent extruder was used to obtain the pellets of polymers. Table 1 shows compositions of the polymer compositions, heating temperatures, feed rates, devolatilizing conditions, the remaining volatile components of the polymers obtained by a devolatilization and extrusion treatment, and total light transmissions.

### Examples 7 to 10

Polymer compositions having the same composition as in Example 1 were prepared and then subjected to a devolatilizing treatment using various kinds of flush nozzles by the same procedures as in Example 1, and a vent extruder was used to obtain the pellets of polymers. The results are similarly shown in Table 2.

### Examples 11 to 19

Polymer compositions having various compositions were prepared and then subjected to a devolatilizing treatment by the same procedures as in Example 1, and a vent extruder was used to obtain the pellets of polymers. The results are similarly shown in Tables 2 to 4.

### Comparative Example 1

A polymer composition containing 60 parts of poly(methyl methacrylate), 25.6 parts of methyl methacrylate, 1.1 parts of methyl acrylate and 13.3 parts of toluene was prepared by the use of the same system as in Example 1, and it was then fed to a heater 3 at a flow rate of 1 kg/hr, while maintained at 150°C.

Next, devolatilization was carried out under the same conditions as in Example 1, but at this time, the pressure in the heater 3 was 8 kg/cm². In a polymer separated in a strand state having an outer diameter of about 4 mm, there were contained 8.3% of methyl methacrylate, 0.35% of methyl acrylate and 6.3% of toluene, and the degree of foaming was low. Afterward, this polymer was similarly treated by an extruder, and the thus obtained polymer pellets contained 0.62% of methyl methacrylate, 0.03% of methyl acrylate and 0.65% of toluene. The concentration of the total volatile components was 1.3%.

### Comparative Example 2

A polymer composition containing 71 parts of poly(methyl methacrylate), 27.8 parts of methyl methacrylate and 1.2 parts of methyl acrylate was prepared by the use of the same system as in Example 1, and it was then fed to a heater 3 at a flow rate of 1 kg/hr, while maintained at 150°C. Next, devolatilization was carried out under the same conditions as in Example 1, but at this time, the pressure in the heater 3 was 7 kg/cm². In a polymer separated in a strand state having an outer diameter of about 4 mm, there were contained 8.5% of methyl methacrylate and 0.35% of methyl acrylate. Afterward, this polymer was similarly treated by an extruder, and the thus obtained polymer pellets contained 1.05% of methyl methacrylate and 0.04% of methyl acrylate. The concentration of the total volatile components was 1.09%.

### Reference Example 1

Continuous solution polymerization was carried out by the use of a system shown in Fig. 3. In a blend tank 17, there were mixed 83.2 parts of methyl methacrylate, 3.5 parts of methyl acrylate, 13.3 parts of methanol, 0.01 parts of di-tert-amyl peroxide and 0.23 part of n-dodecyl mercaptan in a nitrogen atmosphere to prepare a material solution. Next, 4.6 kg of this material solution was placed in a polymerization tank 16, and it was sealed up. The material solution was heated up to 150°C and polymerization was then continued until a monomer conversion and a polymer concentration reached 69% and 60%, respectively, and next, the material solution was continuously fed to the polymerization tank 16 at a flow rate of 1 kg/hr. A reaction temperature in the polymerization tank 16 was set to 150°C and an average residence time was set to 4.6 hours, thereby preparing a polymer composition having a weight-average molecular weight of about 100,000 and containing 60 parts of poly(methyl methacrylate), 25.6 parts of methyl methacrylate, 1.1 parts of methyl acrylate and 13.3 parts of methanol.

### Example 20

In this example, a system shown in Fig. 3 was used. The polymer composition prepared in Reference Example 1 was continuously fed to a heater 3 at a flow rate of 1 kg/hr by the use of a metering pump 2, and devolatilization was then carried out under the same conditions as in Example 1. At this time, the internal pressure in the heater 3 was 25 kg/cm². In a polymer separated in a foaming strand state having an outer diameter of about 8 mm in the tank, there were contained 3.4% of methyl methacrylate, 0.14% of methyl acrylate and 0.03% of methanol as the remaining volatile components. Afterward, this polymer was treated under the same conditions as Example 1 by a vent extruder, and the remaining volatile components in the thus obtained polymer pellets were 0.36% of methyl methacrylate and 0.01% of methyl acrylate. The concentration of the total volatile components was 0.37%. The content of methanol was less than detection limit. The polymer had a total light transmission of 93% and a good appearance, i.e., a colorless transparent appearance.

### Reference Example 2

Continuous bulk polymerization was carried out by the use of a system shown in Fig. 5. In a blend tank 17, there were mixed 96 parts of methyl methacrylate, 4 parts of methyl acrylate, 0.018 part of di-tert-butyl peroxide and 0.2 part of n-dodecyl mercaptan in a nitrogen atmosphere phere to prepare a material solution. Next, 4.6 kg of this material solution was placed in a polymerization tank 16, and it was sealed up. The material solution was heated up to 150°C and polymerization was then continued until a monomer conversion reached 60%, and next, the material solution was continuously fed to the polymerization tank 16 at a flow rate of 1 kg/hr. A reaction temperature in the polymerization tank 16 was set to 150°C and an average residence time was set to about 4.6 hours, thereby preparing a polymer composition having a weight-average molecular weight of about 100,000 and containing 60 parts of poly(methyl methacrylate), 38.4 parts of methyl methacrylate and 1.6 parts of methyl acrylate.

### Example 21

In this example, a system shown in Fig. 5 was used. The polymer composition prepared in Reference Example 2 was continuously drawn at a flow rate of 1 kg/hr by the use of a metering pump 2, and methanol was added at a flow rate of 0.153 kg/hr through an injection inlet 20 and it was uniformly mixed by a mixer 19 to prepare a polymer composition containing 52.0 parts of poly(methyl methacrylate), 33.3 parts of methyl methacrylate, 1.4 parts of methyl acrylate and 13.3 parts of methanol. This polymer composition was continuously fed to a heater 3 at a flow rate of 1.153 kg/hr, and devolatilization was then carried out under the same conditions as in Example 1. At this time, the internal pressure in the heater 3 was 24 kg/cm². In a polymer separated in a foaming strand state having an outer diameter of about 7 mm in the tank, there were contained 4.1% of methyl methacrylate, 0.17% of methyl acrylate and 0.03% of methanol as the remaining volatile components. Afterward, this polymer was treated under the same conditions as Example 1 by a vent extruder, and the remaining volatile components in the thus obtained polymer pellets were 0.35% of methyl methacrylate and 0.01% of methyl acrylate. The concentration of the total volatile components was 0.36%. The content of methanol was less than detection limit. The polymer had a total light transmission of 93% and a good appearance, i.e., a colorless transparent appearance.

Incidentally, abbreviations in Tables 1 to 8 have the following meanings.
- MMA:: Methyl methacrylate
- MA:: Methyl acrylate
- ME:: Methanol
- EA:: Ethyl acrylate
- BA:: n-butyl acrylate
- AC:: Acetone
- ST:: Styrene
- TOL:: Toluene
- ND:: Less than the detection limit (0.01%) of gas chromatography.

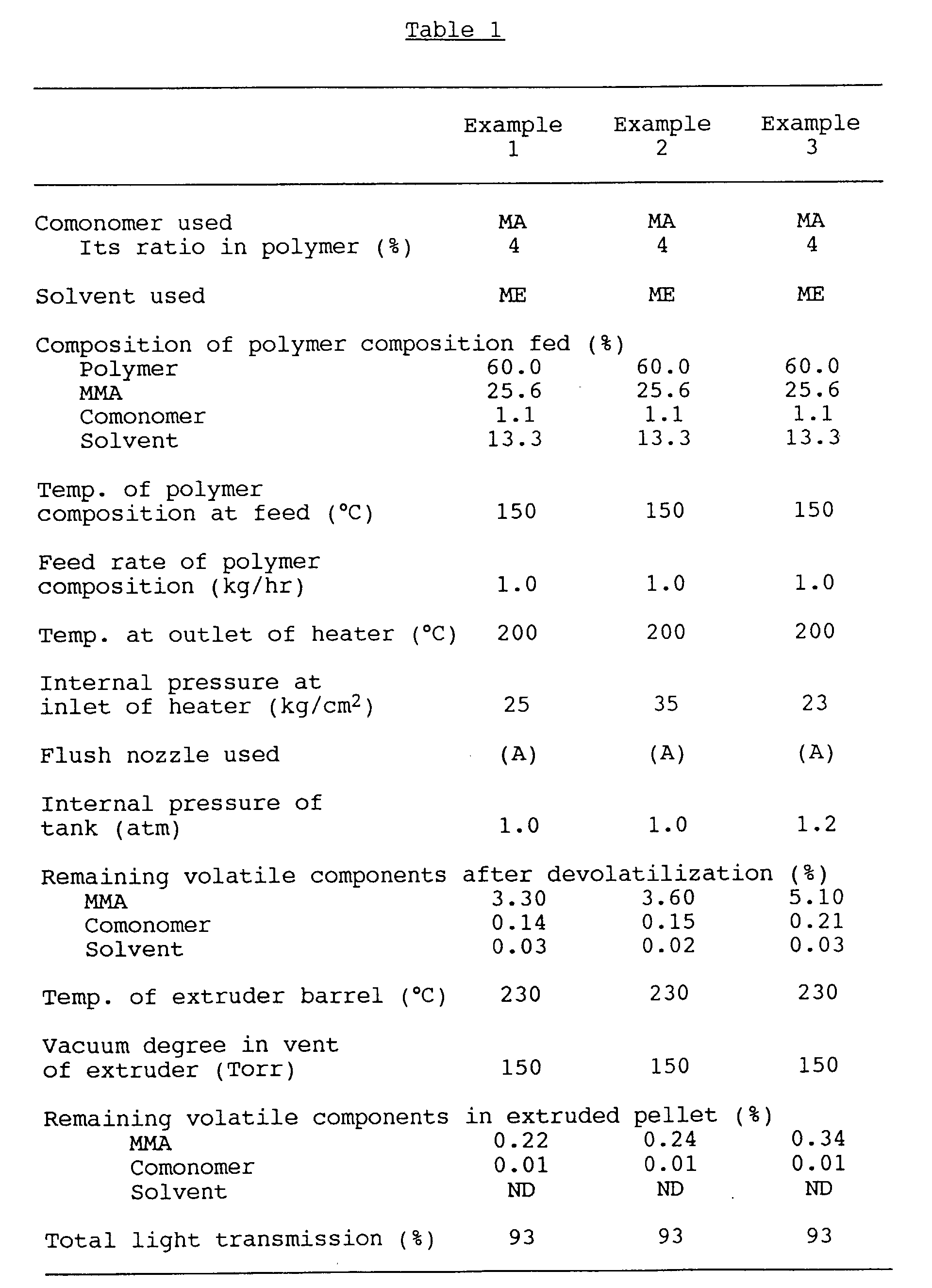

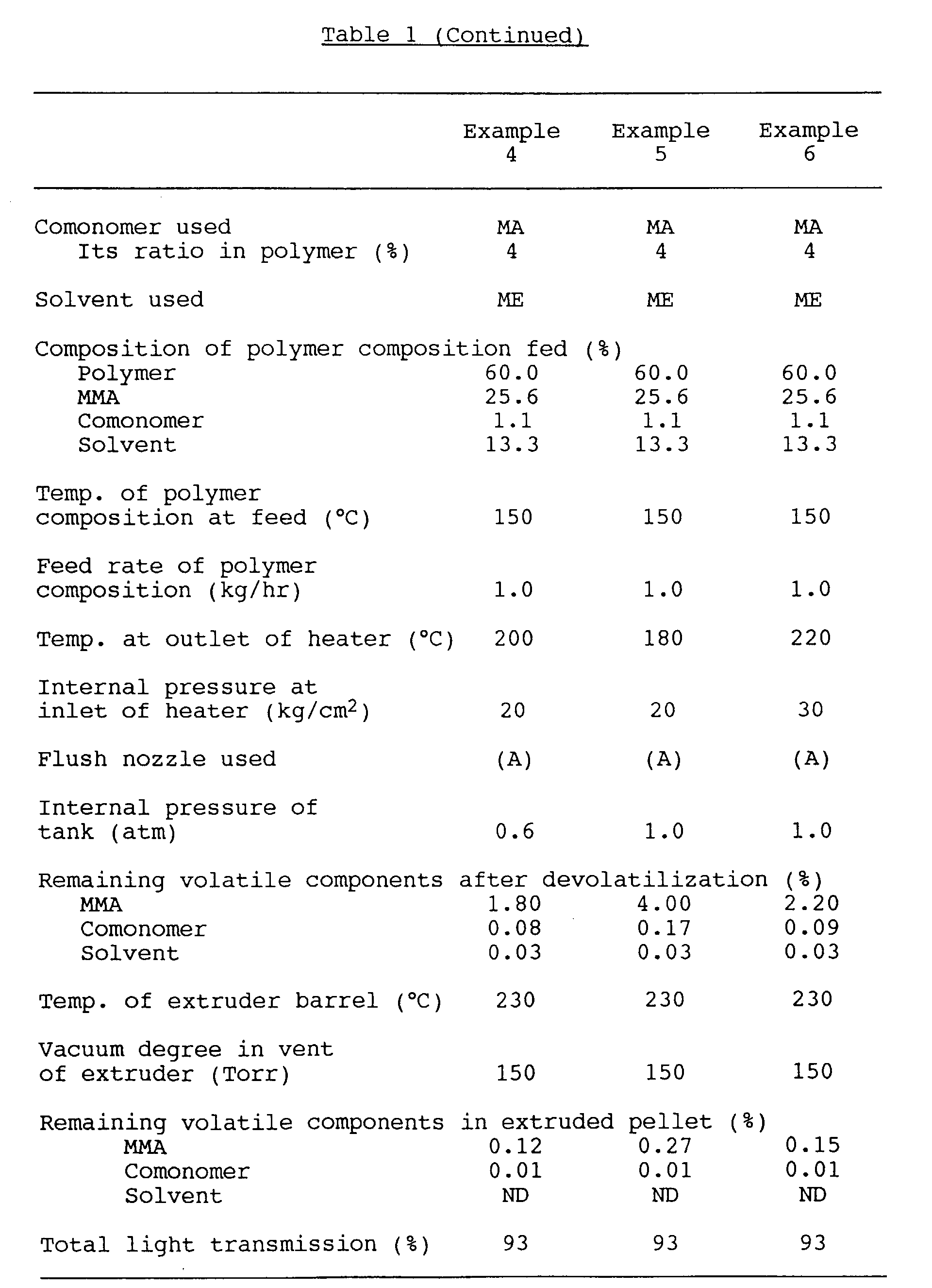

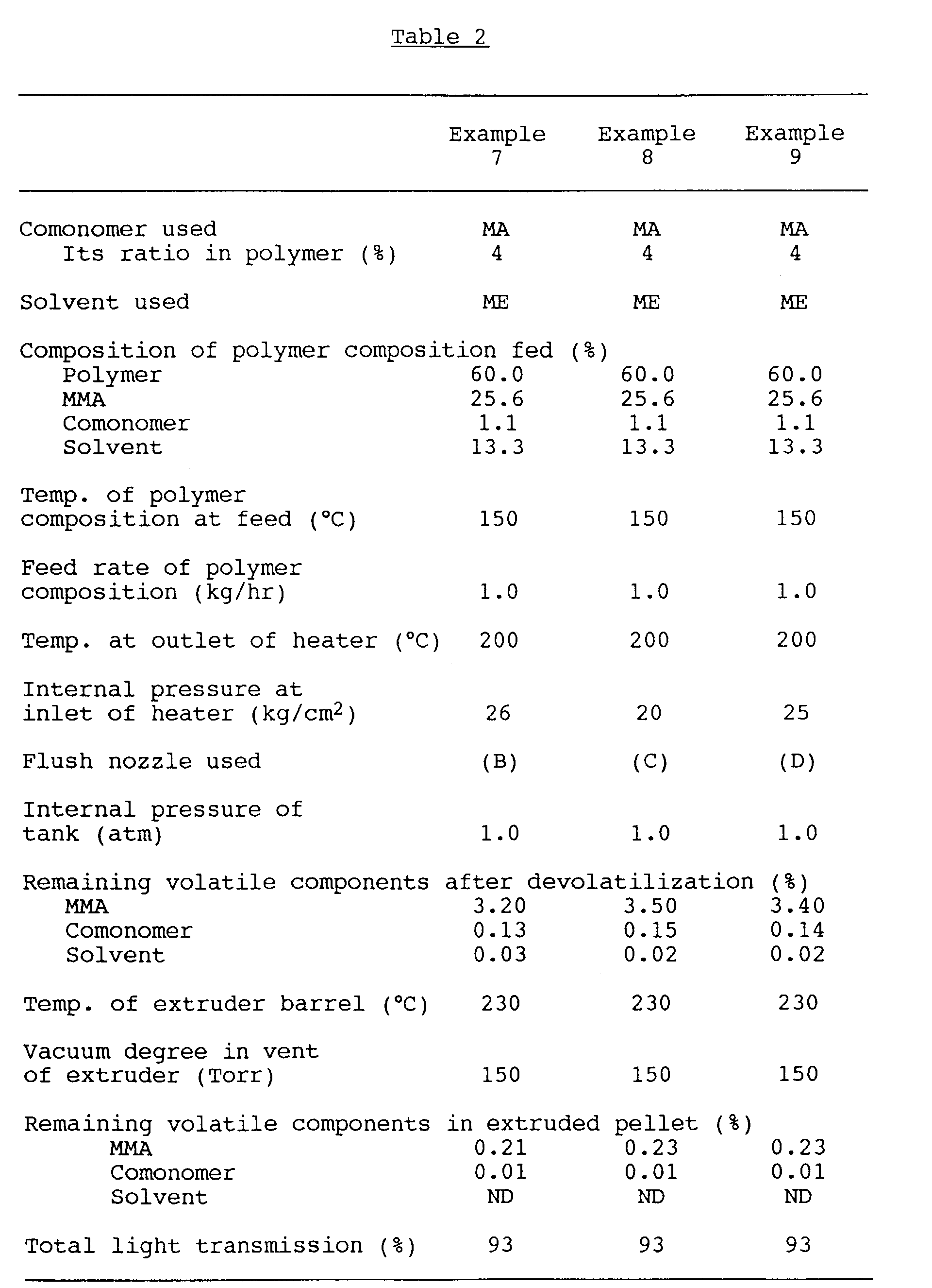

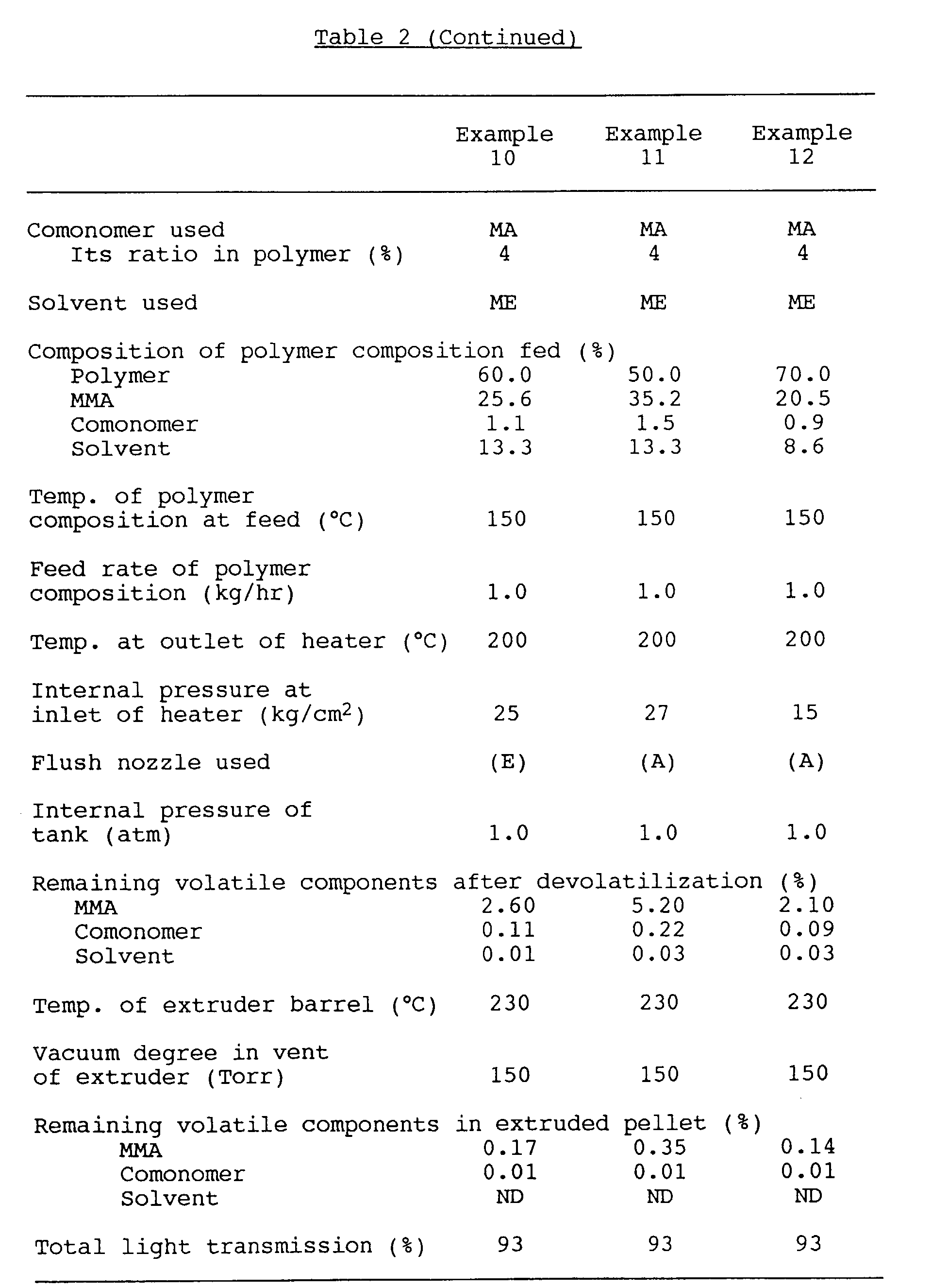

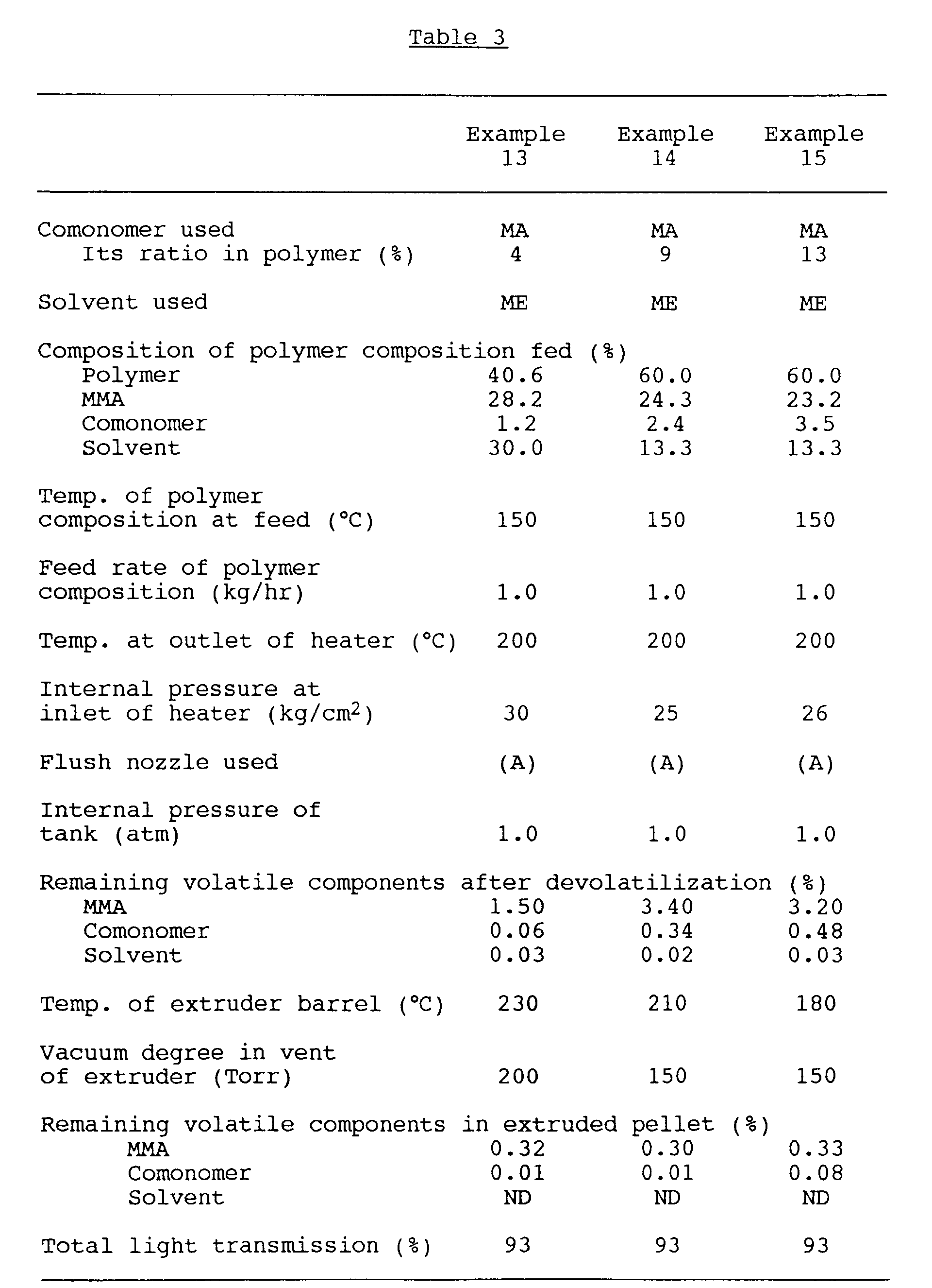

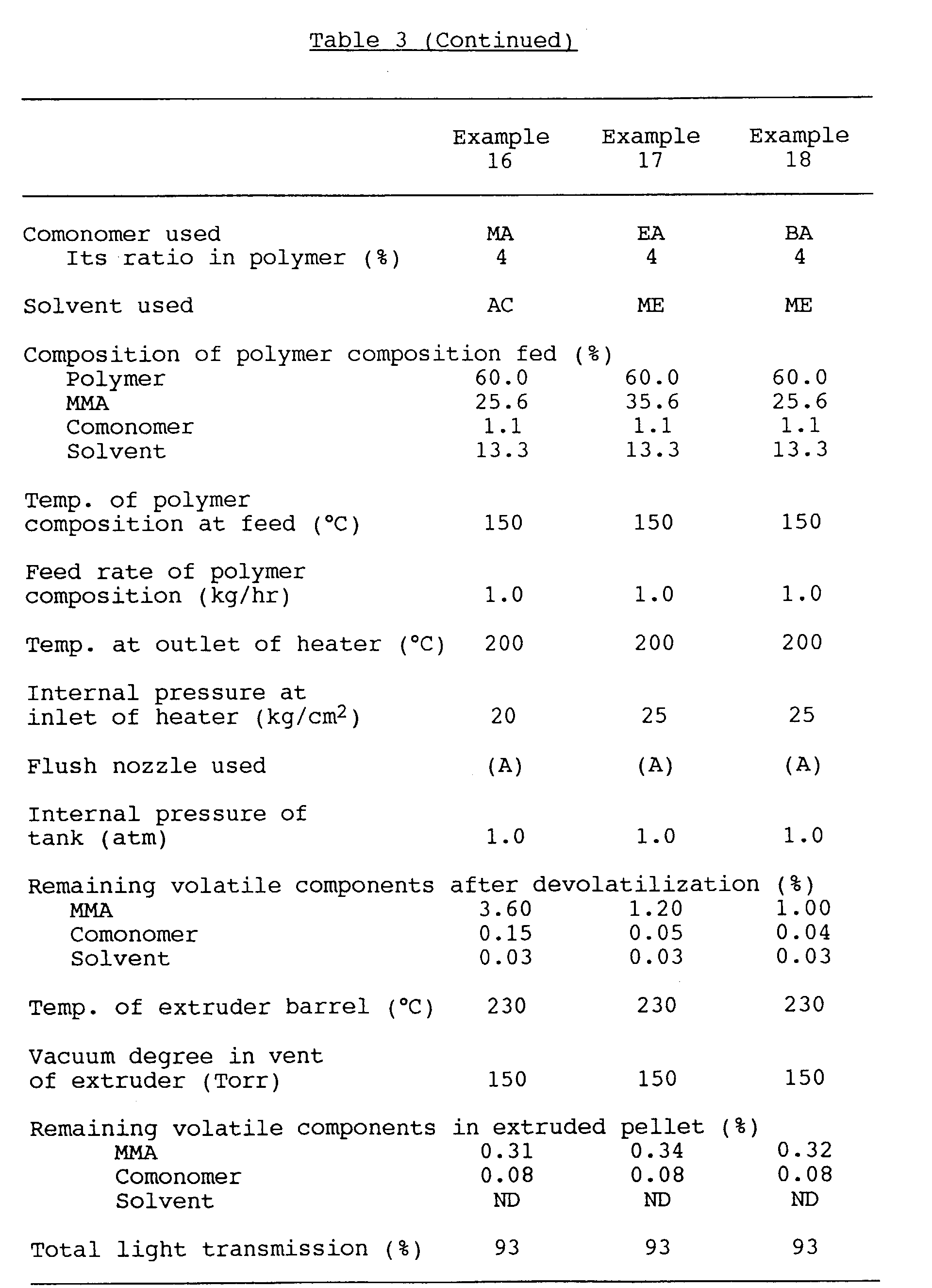

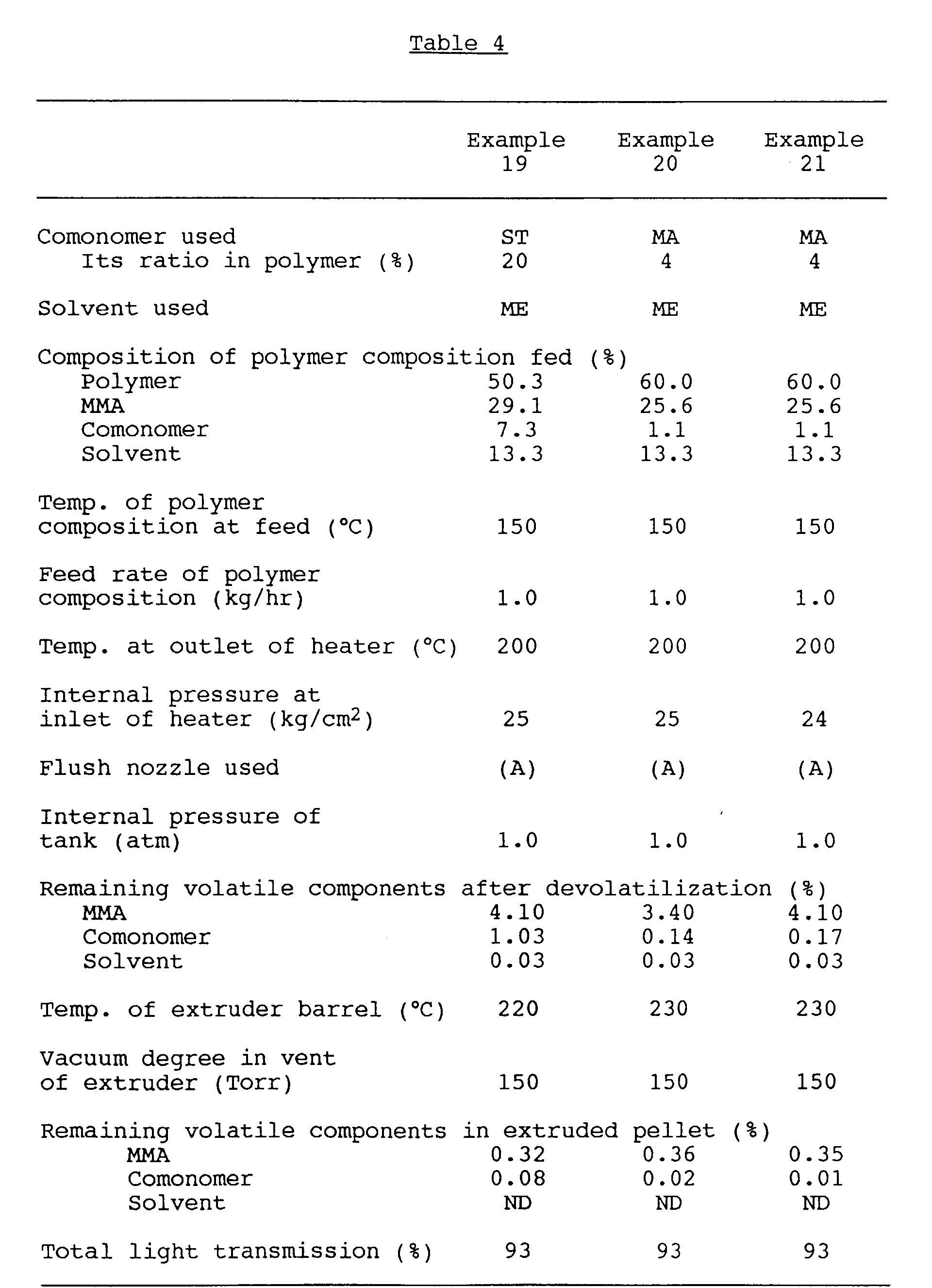

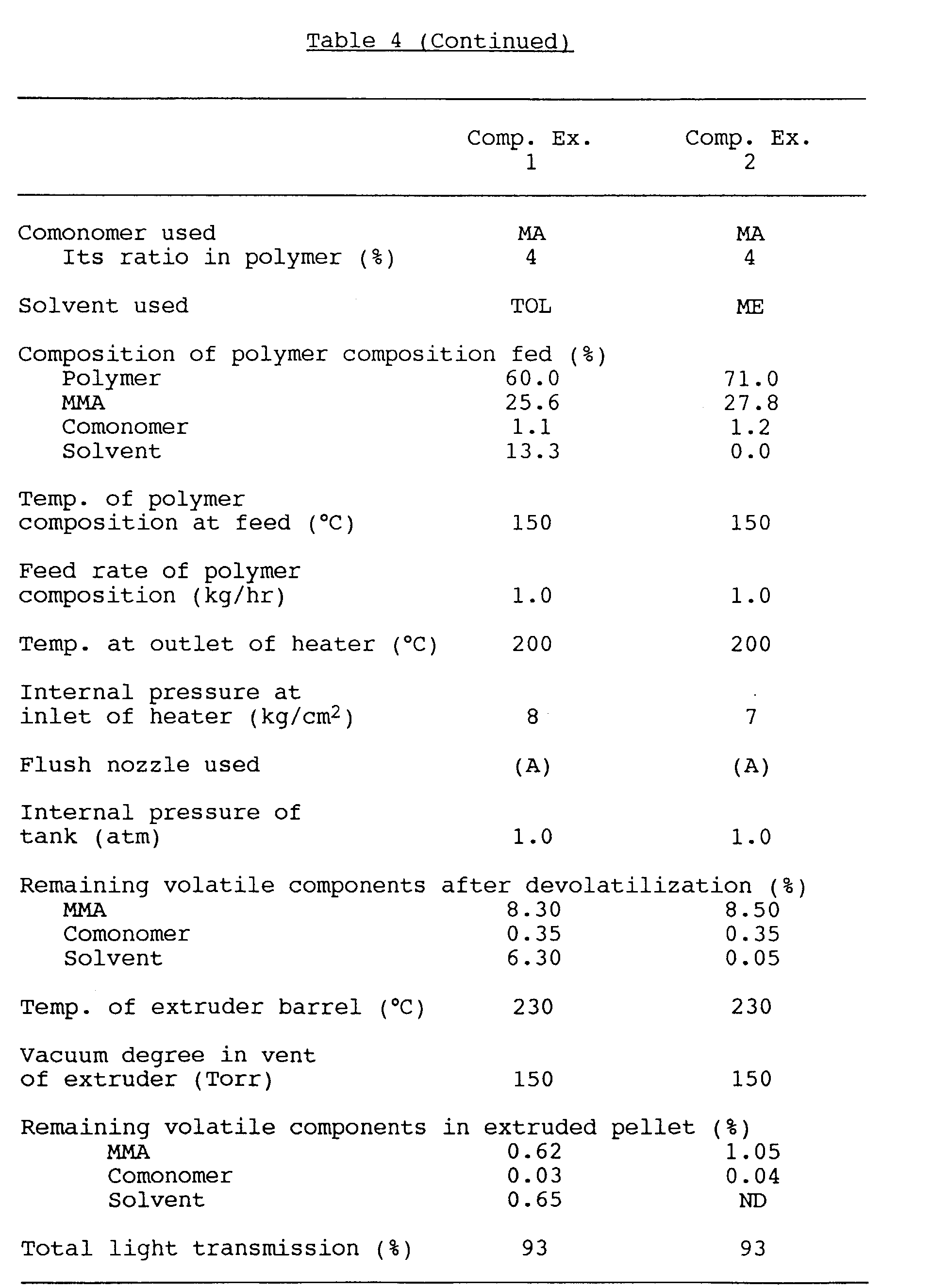

### Example 22

In this example, a system shown in Fig. 1 was used. First, 5 kg of a polymer composition containing 60.0 parts of poly(methyl methacrylate), 25.6 parts of methyl methacrylate, 1.1 parts of methyl acrylate and 13.3 parts of methanol was placed in a stirring tank 1. Next, the composition was fed to a heater 3 at a flow rate of 1 kg/hr by a metering pump 2, while maintained at 150°C, and then discharged through a flush nozzle 5 (a vent plug) into a tank 6 of a nitrogen gas atmosphere. At this time, a nitrogen gas was introduced at a flow rate of 0.6 ℓ/min into the tank 6 through an inert gas inlet 7' immediately in front of the flush nozzle 5. The polymer composition was heated up to 180°C in the heater, and at this time, the pressure at an inlet of the heater was 25 kg/cm². A generated vapor of volatile components was taken out through an exhaust opening 8 at an upper position of the tank, passed through a condenser 10 in which the volatile components were condensed, and then collected in a storage tank (a receiver) 11. In this case, the collection of the volatile components was done at 0.37 kg/hr in a ratio of 93% of a theoretical amount, and in the volatile components, there were contained 63% of methyl methacrylate, 2.5% of methyl acrylate and 32.5% of methanol. While a noncondensable gas was returned to the tank 6 by a blower 13 and then circulated through the system, and the pressure in the system was maintained at 0.9 to 1.1 atm by exhausting an excessive gas.

The flushed polymer was cooled to about 80°C in the tank 6, and then allowed to flow down in a foaming strand state having an outer diameter of about 8 mm. In this polymer, there were contained 3.3% of methyl methacrylate, 0.17% of methyl acrylate and 0.03% of methanol as the remaining volatile components. This polymer was directly fed to the feed portion of a vent extruder 9 directly connected to the outlet of the tank 6, and the volatile components were further removed at a barrel temperature of 230°C and a vent vacuum degree of 150 Torr. Afterward, the polymer was cut by a pelletizer 14 to obtain pellets of the polymer. The vapor of the volatile components exhausted through the vent opening of the vent extruder 9 was led into a distillation column 14, in which high-boiling components were separated and removed, and the monomer components were then collected by a condenser. The remaining volatile components in the obtained polymer were 0.22% of methyl methacrylate and 0.01% of methyl acrylate, and the content of methanol was less than detection limit. The concentration of the total volatile components was 0.23%. The polymer had a total light transmission of 93% and a good appearance, i.e., a colorless transparent appearance.

### Examples 23 to 27

Polymer compositions having the same composition as in Example 22 were prepared and then subjected to a devolatilizing treatment in a similar manner under various conditions where a heating temperature and the amount of an inert gas to he introduced were changed, and a vent extruder was used to obtain the pellets of polymers. Table 5 shows compositions of the polymer compositions, heating temperatures, feed rates, devolatilizing conditions, the remaining volatile components of the polymers obtained by a devolatilization and extrusion treatment, and total light transmissions.

### Examples 28 to 31

Polymer compositions having the same composition as in Example 22 were prepared and then subjected to a devolatilizing treatment using various kinds of flush nozzles by the same procedures as in Example 22, and a vent extruder was used to obtain the pellets of polymers. The results are similarly shown in Table 6.

### Examples 32 to 40

Polymer compositions having various compositions were prepared and then subjected to a devolatilizing treatment by the same procedures as in Example 22, and a vent extruder was used to obtain the pellets of polymers. The results are similarly shown in Tables 6 to 8.

### Comparative Example 3

A polymer composition containing 60 parts of poly(methyl methacrylate), 25.6 parts of methyl methacrylate, 1.1 parts of methyl acrylate and 13.3 parts of toluene was prepared by the use of the same system as in Example 22, and it was then fed to a heater 3 at a flow rate of 1 kg/hr, while maintained at 150°C.

Next, devolatilization was carried out under the same conditions as in Example 22, but at this time, the pressure in the heater 3 was 9 kg/cm². In a polymer separated in a strand state having an outer diameter of about 4 mm, there were contained 7.3% of methyl methacrylate, 0.37% of methyl acrylate and 6.3% of toluene, and the degree of foaming was low. Afterward, this polymer was similarly treated by an extruder, and the thus obtained polymer pellets contained 0.55% of methyl methacrylate, 0.03% of methyl acrylate and 0.63% of toluene. The concentration of the total volatile components was 1.21%.

### Reference Example 3

Continuous solution polymerization was carried out by the use of a system shown in Fig. 4. In a blend tank 17, there were mixed 83.2 parts of methyl methacrylate, 3.5 parts of methyl acrylate, 13.3 parts of methanol, 0.01 parts of di-tert-amyl peroxide and 0.23 part of n-dodecyl mercaptan in a nitrogen atmosphere to prepare a material solution. Next, 4.6 kg of this material solution was placed in a polymerization tank 16, and it was sealed up. The material solution was heated up to 150°C and polymerization was then continued until a monomer conversion and a polymer concentration reached 69% and 60%, respectively, and next, the material solution was continuously fed to the polymerization tank 16 at a flow rate of 1 kg/hr. A reaction temperature in the polymerization tank 16 was set to 150°C and an average residence time was set to 4.6 hours, thereby preparing a polymer composition having a weight-average molecular weight of about 100,000 and containing 60 parts of poly(methyl methacrylate), 25.6 parts of methyl methacrylate, 1.1 parts of methyl acrylate and 13.3 parts of methanol.

### Example 41

In this example, a system shown in Fig. 4 was used. The polymer composition prepared in Reference Example 3 was continuously fed to a heater 3 at a flow rate of 1 kg/hr by the use of a metering pump 2, and devolatilization was then carried out under the same conditions as in Example 22. At this time, the internal pressure in the heater 3 was 25 kg/cm². In a polymer separated in a foaming strand state having an outer diameter of about 8 mm in the tank, there were contained 1.1% of methyl methacrylate, 0.05% of methyl acrylate and 0.03% of methanol as the remaining volatile components. Afterward, this polymer was treated under the same conditions as Example 22 by a vent extruder, and the remaining volatile components in the thus obtained polymer pellets were 0.33% of methyl methacrylate and 0.01% of methyl acrylate. The concentration of the total volatile components was 0.34%. The content of methanol was less than detection limit. The polymer had a total light transmission of 93% and a good appearance, i.e., a colorless transparent appearance.

### Reference Example 4

Continuous bulk polymerization was carried out by the use of a system shown in Fig. 6. In a blend tank 17, there were mixed 95 parts of methyl methacrylate, 5 parts of methyl acrylate, 0.018 part of di-tert-butyl peroxide and 0.2 part of n-dodecyl mercaptan in a nitrogen atmosphere to prepare a material solution. Next, 4.6 kg of this material solution was placed in a polymerization tank 16, and it was sealed up. The material solution was heated up to 150°C and polymerization was then continued until a monomer conversion reached 60%, and next, the material solution was continuously fed to the polymerization tank 16 at a flow rate of 1 kg/hr. A reaction temperature in the polymerization tank 16 was set to 150°C and an average residence time was set to about 4.6 hours, thereby preparing a polymer composition having a weight-average molecular weight of about 100,000 and containing 60 parts of poly(methyl methacrylate), 38.4 parts of methyl methacrylate and 1.6 parts of methyl acrylate.

### Example 42

In this example, a system shown in Fig. 6 was used. The polymer composition prepared in Reference Example 4 was continuously drawn at a flow rate of 1 kg/hr by the use of a metering pump 2, and methanol was added at a flow rate of 0.153 kg/hr through an injection inlet 20 and it was uniformly mixed by a mixer 19 to prepare a polymer composition containing 52.0 parts of poly(methyl methacrylate), 33.3 parts of methyl methacrylate, 1.4 parts of methyl acrylate and 13.3 parts of methanol. This polymer composition was continuously fed to a heater 3 at a flow rate of 1.153 kg/hr, and devolatilization was then carried out under the same conditions as in Example 22. At this time, the internal pressure in the heater 3 was 28 kg/cm². In a polymer separated in a foaming strand state having an outer diameter of about 7 mm in the tank, there were contained 4.1% of methyl methacrylate, 0.05% of methyl acrylate and 0.03% of methanol as the remaining volatile components. Afterward, this polymer was treated under the same conditions as Example 22 by a vent extruder, and the remaining volatile components in the thus obtained polymer pellets were 0.33% of methyl methacrylate and 0.01% of methyl acrylate. The concentration of the total volatile components was 0.34%. The content of methanol was less than detection limit. The polymer had a total light transmission of 93% and a good appearance, i.e., a colorless transparent appearance.

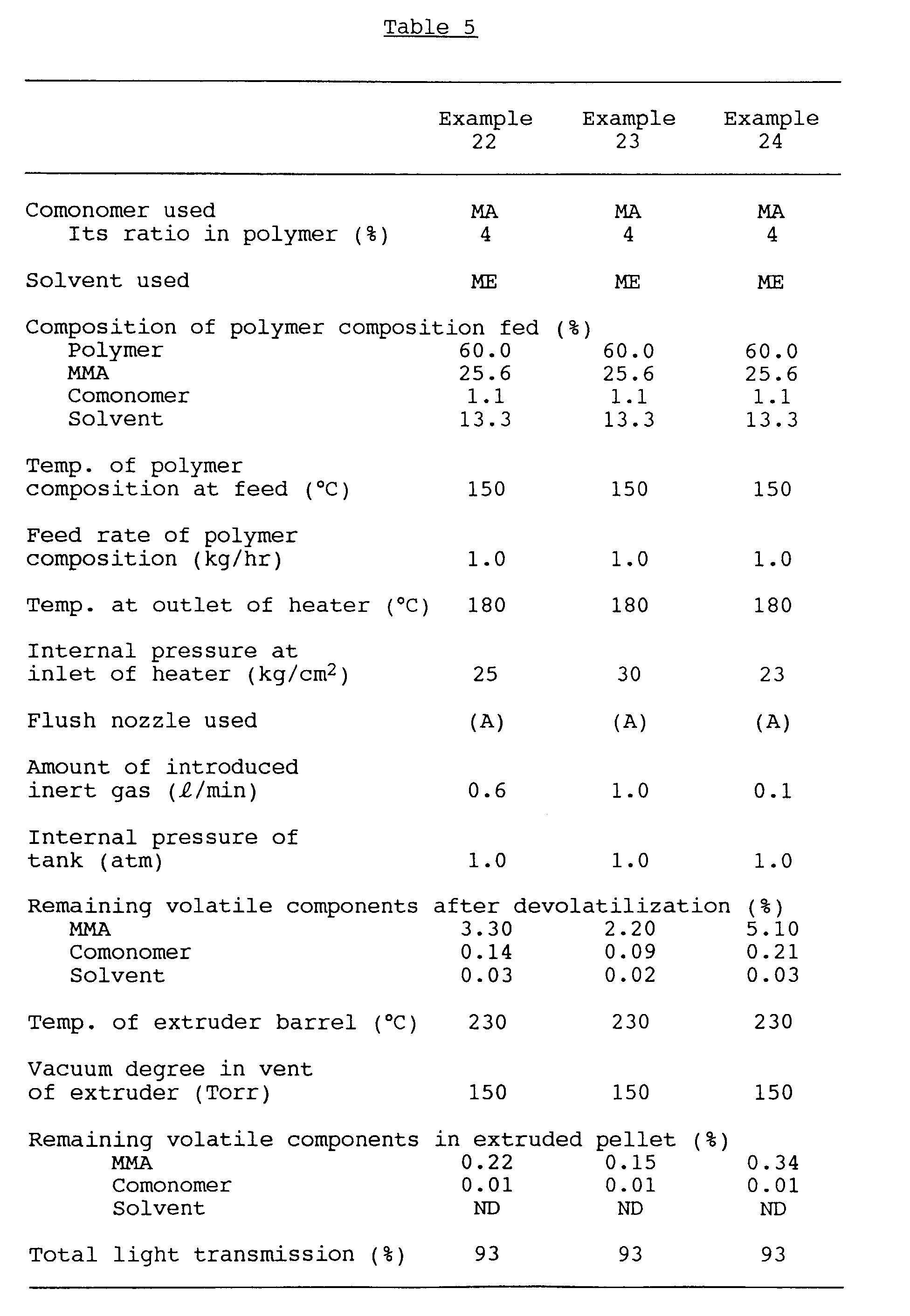

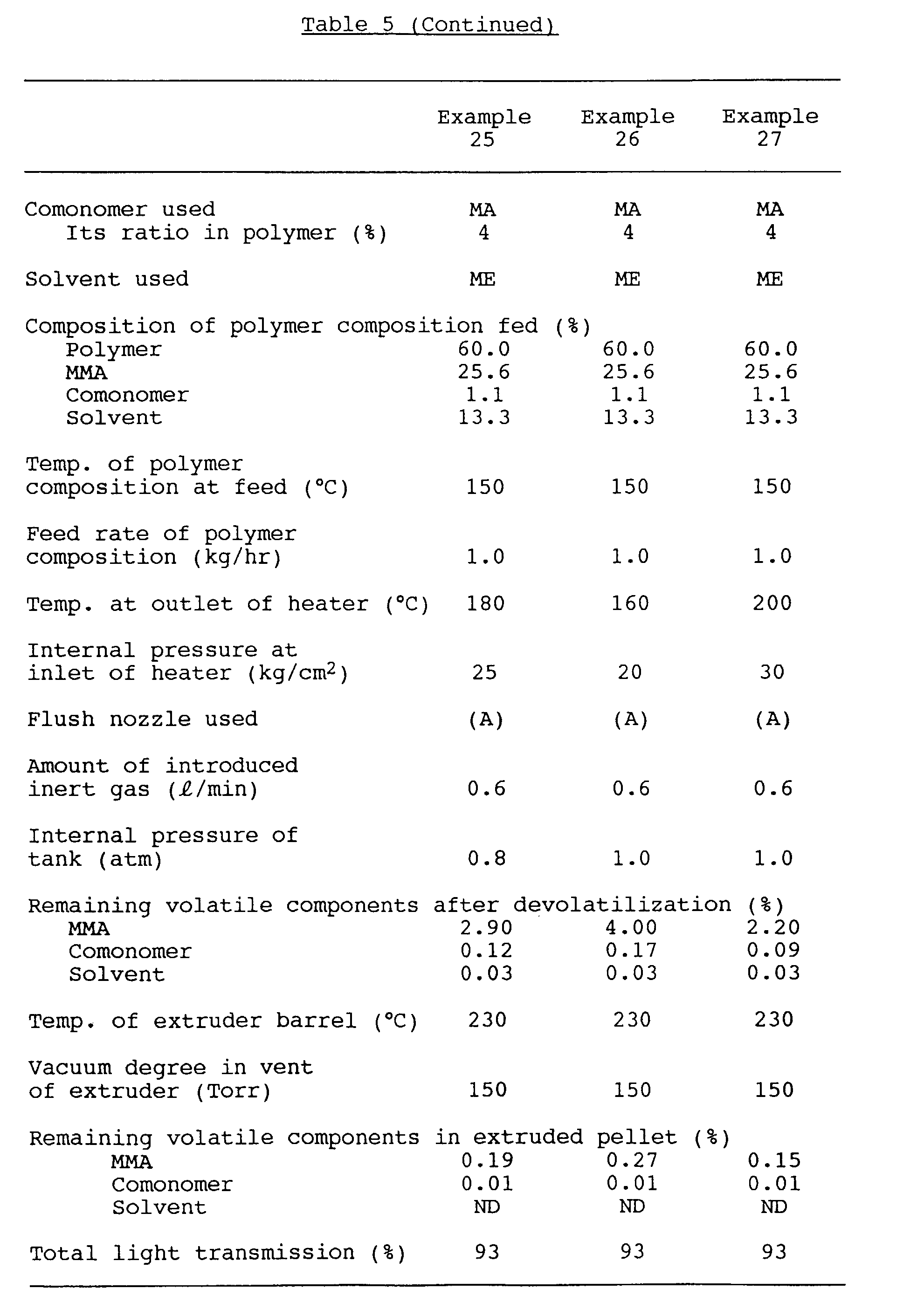

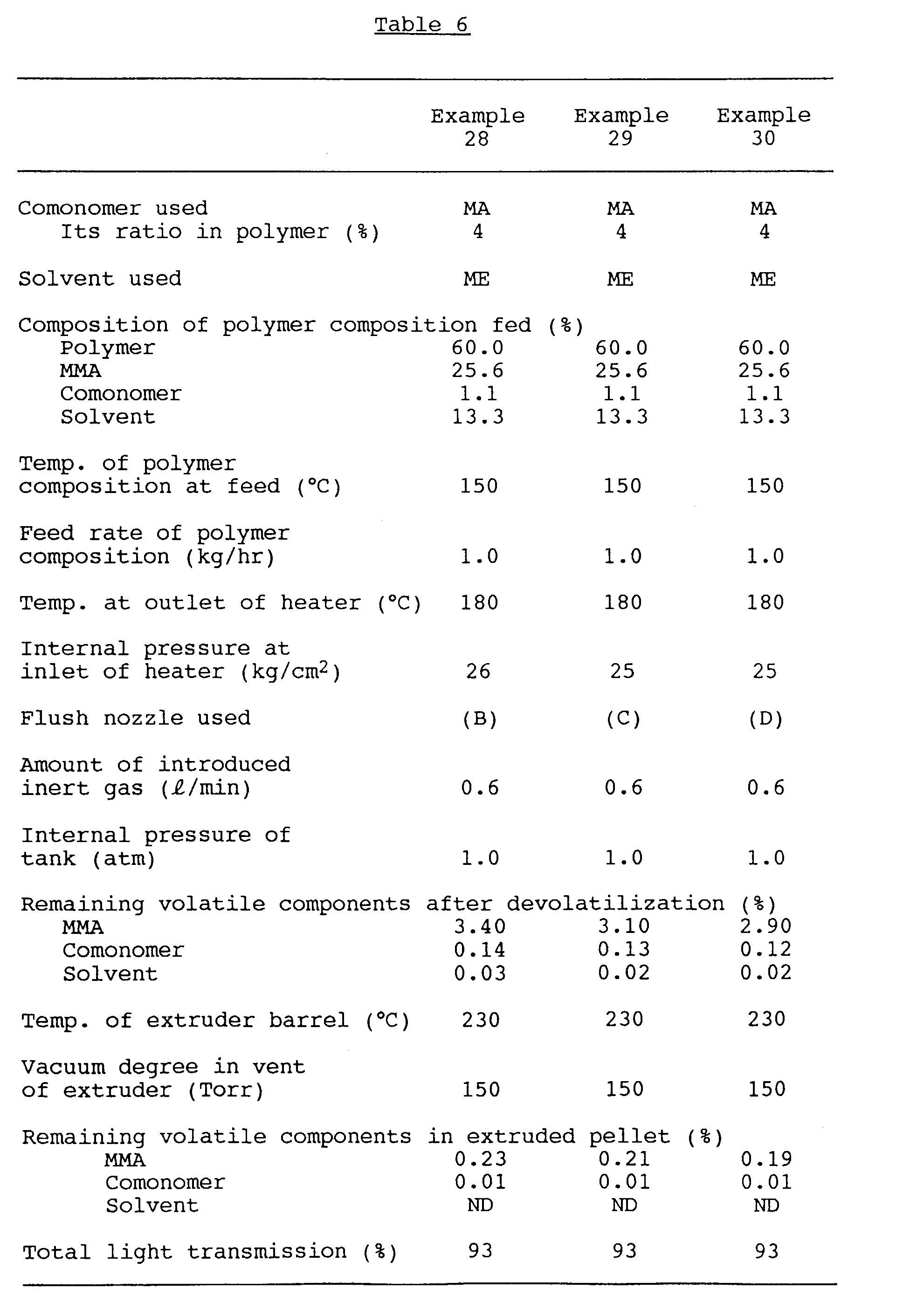

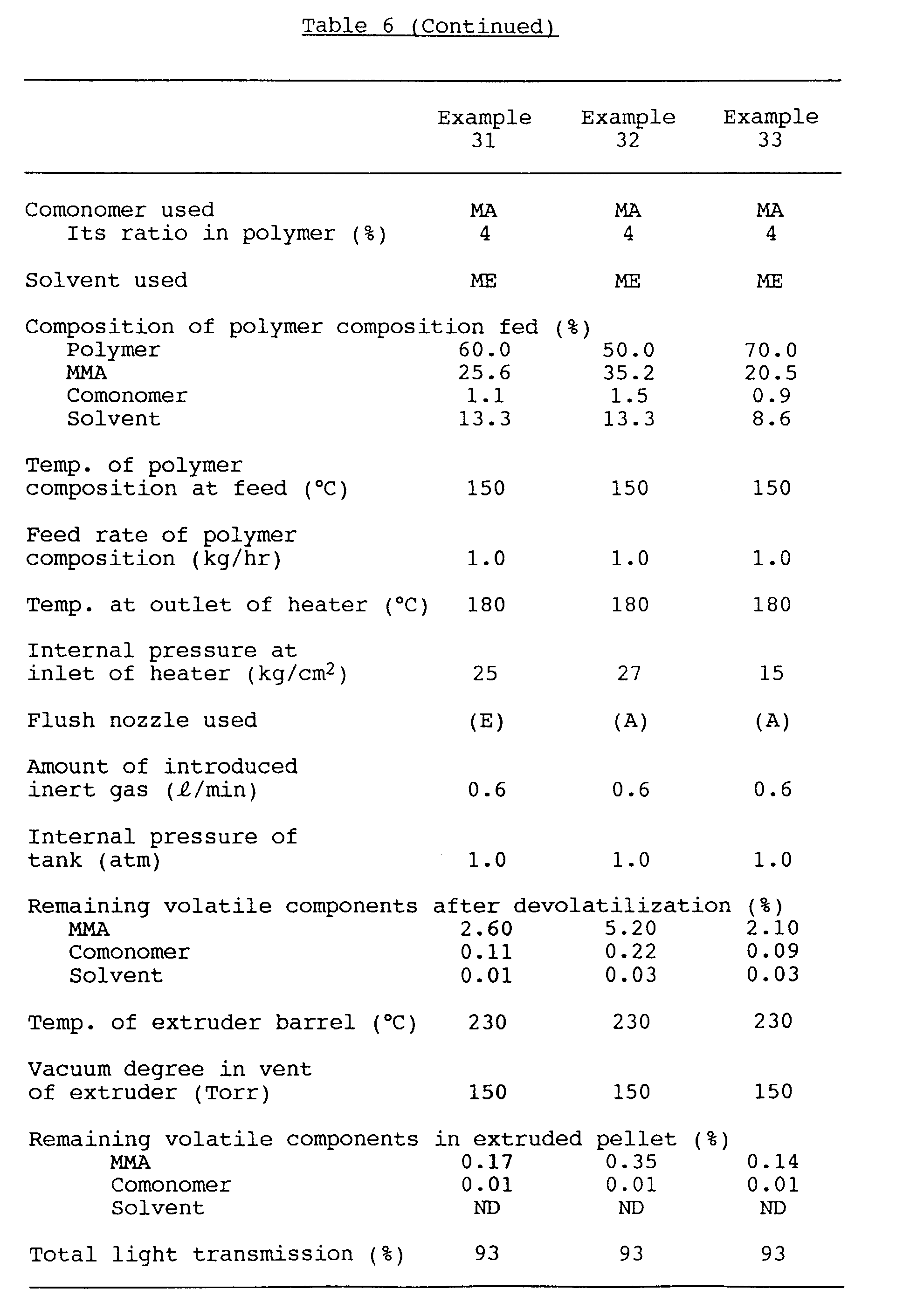

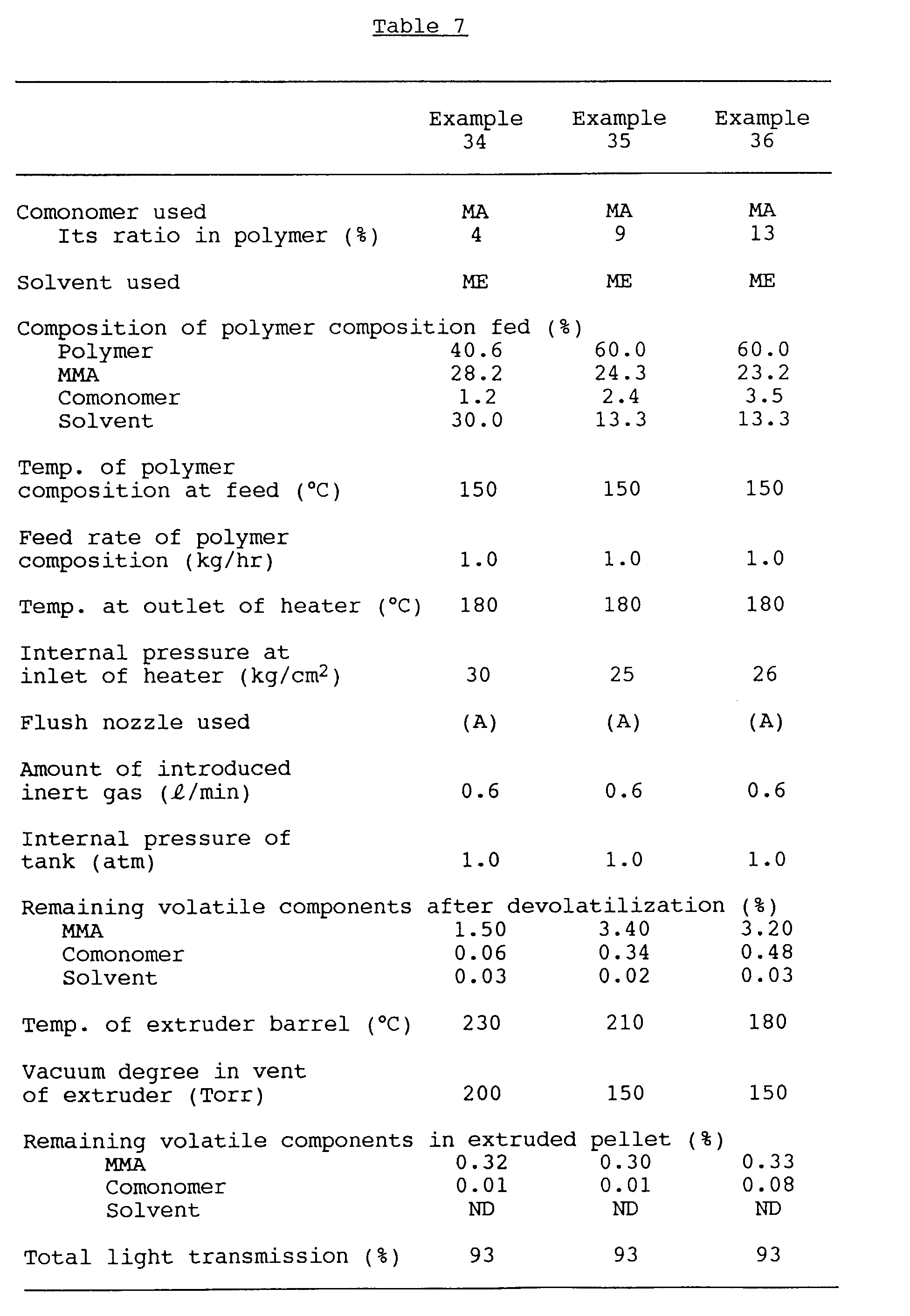

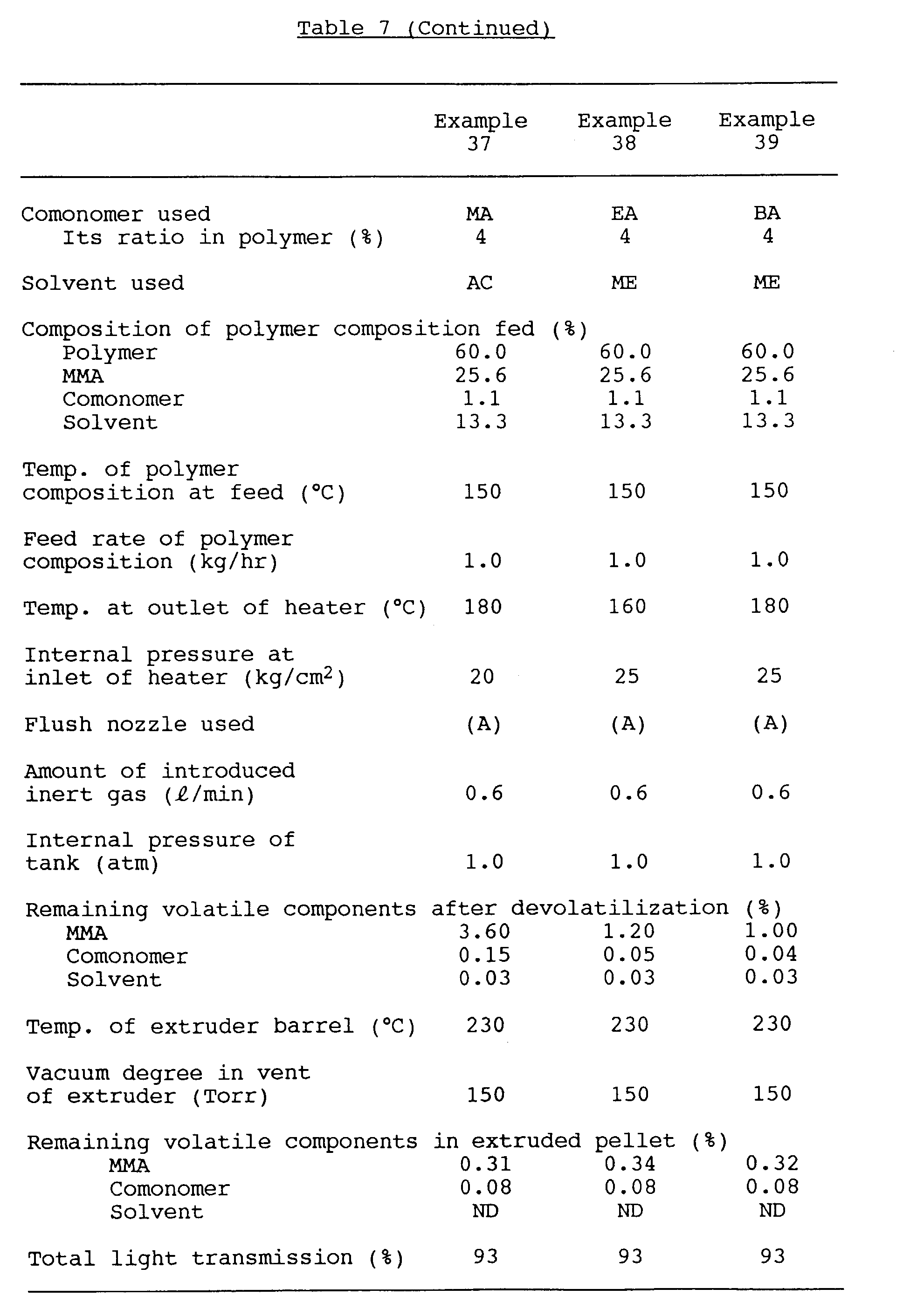

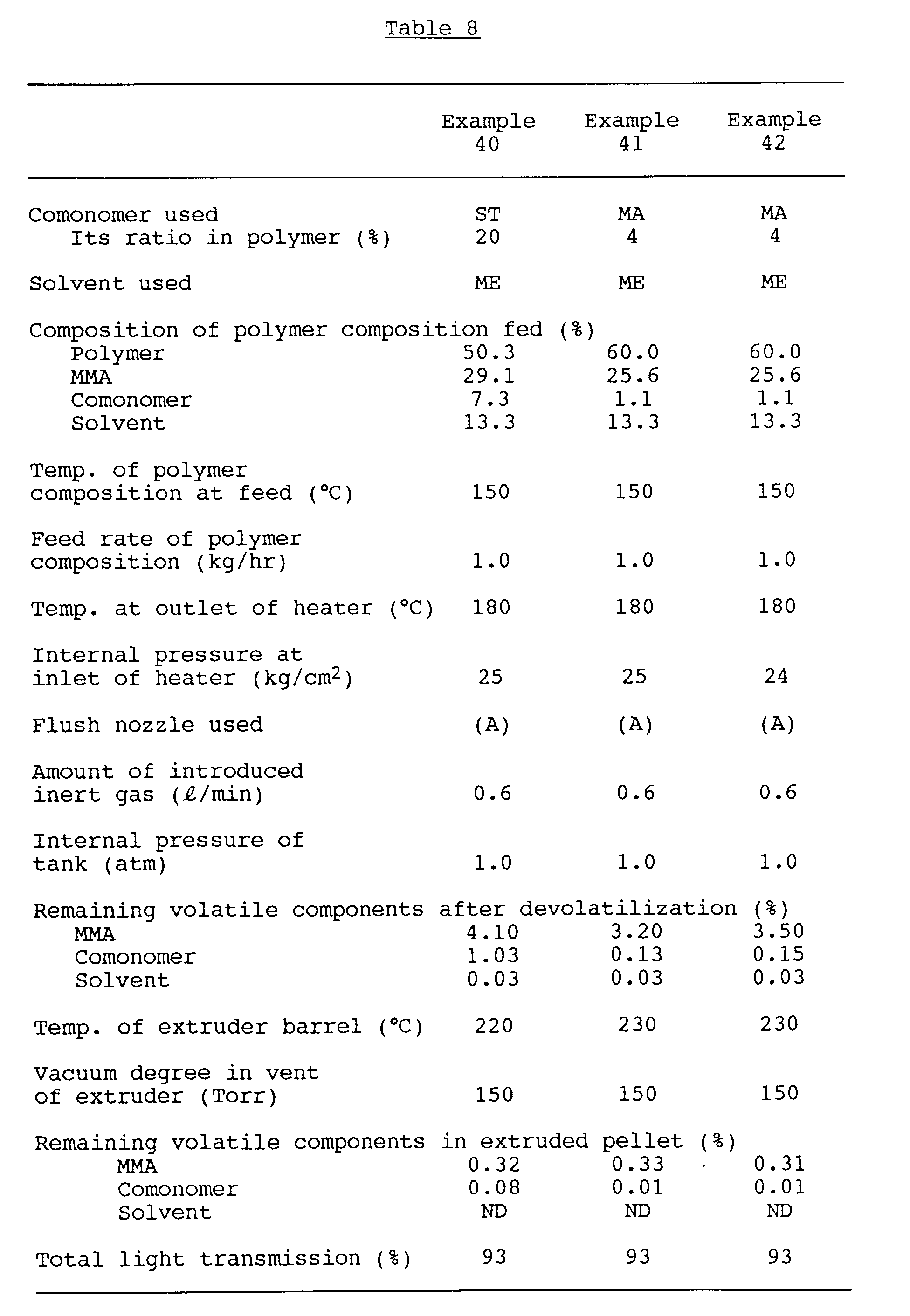

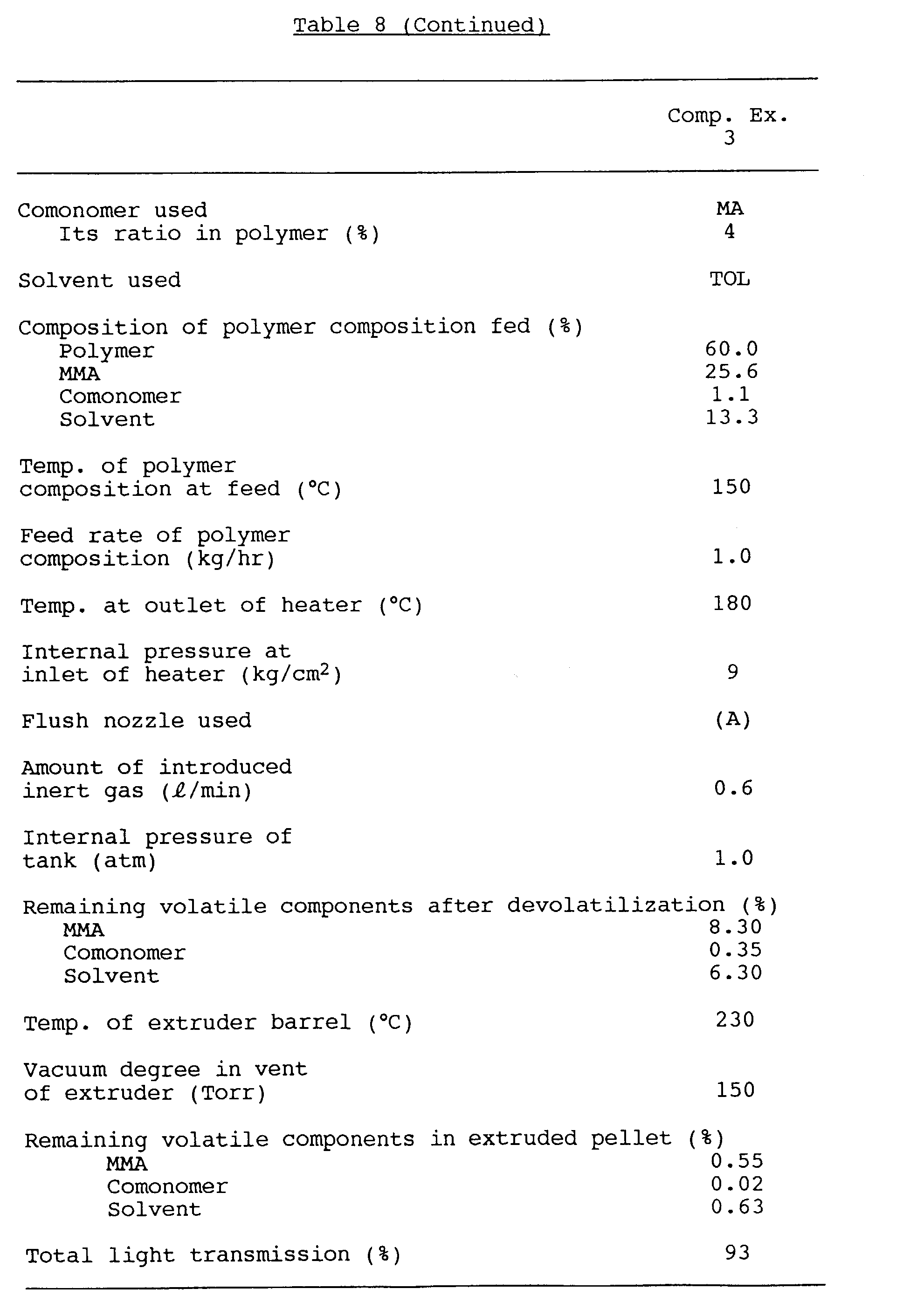

## Claims

1. A process for purifying a polymer by separating and removing volatile components from a polymer composition containing the volatile components which comprises:
(a) a step of heating the polymer composition containing at least one solvent selected from the group consisting of methanol and acetone to a temperature of 120-270 °C by a heater, wherein the internal pressure at the inlet of the heater is at least 14,71 Bar (15 kg/cm²);
(b) a step of discharging the heated polymer composition into a tank in which pressure is maintained at 0,304-1,925 Bar (0.3-1.9 atm), and then separating and collecting most of the volatile components; and
(c) a step of feeding the obtained polymer composition to a vent extruder in which the temperature is set to 160-280 °C and the pressure in the vent portion is set to 0,001333-0,5333 Bar (1-400 Torr), and then extruding it to lower the content of the remaining volatile components in the composition to 1% by weight or less.

2. The process according to Claim 1 wherein the polymer in the polymer composition comprises 75 to 100% by weight of methyl methacrylate as a monomer component, or 30 to 74% by weight of methyl methacrylate and 70 to 26% by weight of styrene as monomer components.

3. The process according to Claim 1 wherein the polymer composition contains methanol.

4. The process according to Claim 1 wherein the polymer composition is heated to a temperature of 150-250 °C, and then discharged through a flush nozzle into a tank in which pressure is maintained at 0,507-1,520 Bar (0.5-1.5 atm).

5. The process according to Claim 4 wherein the flush nozzle through which the polymer composition is discharged is selected from the group consisting of a strand die, a needle valve, a diehead valve, a vent plug, a flat die and a circular die.

6. The process according to Claim 1 wherein the polymer composition is prepared by adding a solvent to a polymer composition obtained by bulk polymerization or solution polymerization.

7. A process for purifying a polymer by separating and removing volatile components from a polymer composition containing the volatile components which comprises:
(a) a step of heating the polymer composition containing at least one solvent selected from the group consisting of methanol and acetone to a temperature of 120-270 °C by a heater; wherein in the internal pressure at the inlet of the heater is at least 14,71 Bar (15 kg/cm²)
(b) a step of discharging the heated polymer composition into a tank in which the pressure is maintained at 0,304-1,925 Bar (0.3-1.9 atm), and then separating and collecting most of the volatile components;
(b') a step of introducing an inert gas into the polymer composition before heating or under heating, or into the vicinity of the polymer composition which is being discharged into the tank, and
(c) a step of feeding the obtained polymer composition to a vent extruder in which the temperature is set to 180-270 °C and the pressure in the vent portion is set to 0,001333-0,5333 Bar (1-400 Torr), and then extruding it to lower the content of the remaining volatile components in the composition to 1% by weight or less.

8. The process according to Claim 7 wherein the polymer in the polymer composition comprises 75 to 100% by weight of methyl methacrylate as a monomer component, or 30 to 74% by weight of methyl methacrylate and 70 to 26% by weight of styrene as monomer components.

9. The process according to Claim 7 wherein the polymer composition contains methanol.

10. The process according to Claim 7 wherein the inert gas to be introduced is nitrogen.

11. The process according to Claim 7 wherein the polymer composition is heated to a temperature of 150-250°C, and then discharged through a flush nozzle into a tank in which pressure is maintained at 0,507-1,520 Bar (0.5-1.5 atm).

12. The process according to Claim 11 wherein the flush nozzle through which the polymer composition is discharged is selected from the group consisting of a strand die, a needle valve, a diehead valve, a vent plug, a flat die, a circular die and an inflation die.

13. The process according to Claim 7 wherein the polymer composition is prepared by adding a solvent to a polymer composition obtained by bulk polymerization or solution polymerization.

## Patentansprüche

1. Verfahren zur Reinigung eines Polymeren durch Abtrennen und Entfernen flüchtiger Komponenten aus einer Polymermasse, welche die flüchtigen Komponenten enthält, das folgendes umfaßt:
(a) einen Schritt des Erhitzens der Polymermasse, die mindestens ein aus der Methanol und Aceton umfassenden Gruppe gewähltes Lösemittel enthält, auf eine Temperatur von 120 - 270°C mittels einer Heizvorrichtung, wobei der Innendruck am Einlaß der Heizvorrichtung mindestens 14,71 bar (15 kg/cm²) beträgt;
(b) einen Schritt des Ablassens der erhitzten Polymermasse in einen Tank, in dem der Druck bei 0,304 - 1,925 bar (0,3 - 1,9 atm) gehalten wird, und des anschließenden Abtrennens und Auffangens eines Großteils der flüchtigen Komponenten; und
(c) einen Schritt des Einspeisens der erhaltenen Polymermasse in einen Entgasungsextruder, in dem die Temperatur auf 160 - 280°C eingestellt ist, und der Druck in dem Entgasungsabschnitt auf 0,001333 - 0,5333 bar (1 - 400 Torr) eingestellt ist, und des anschließenden Extrudierens derselben, um den Gehalt der verbleibenden flüchtigen Komponenten in der Masse auf 1 Gew.-% oder weniger zu senken.

2. Verfahren gemäß Anspruch 1, wobei das Polymer in der Polymermasse 75 bis 100 Gew.-% Methylmethacrylat als Monomerkomponente oder 30 bis 74 Gew.-% Methylmethacrylat und 70 bis 26 Gew.-% Styrol als Monomerkomponenten beinhaltet.

3. Verfahren gemäß Anspruch 1, wobei die Polymermasse Methanol enthält.

4. Verfahren gemäß Anspruch 1, wobei die Polymermasse auf eine Temperatur von 150 - 250°C erhitzt wird und dann durch eine Ausspüldüse in einen Tank abgelassen wird, in dem der Druck bei 0,507 - 1,520 bar (0,5 - 1,5 atm) gehalten wird.

5. Verfahren gemäß Anspruch 4, wobei die Ausspüldüse, durch welche die Polymermasse abgeführt wird, gewählt wird aus der eine Strangdüse, ein Nadelventil, ein Düsenkopfventil, einen Abzugsstößel, eine Flachdüse und eine kreisförmige Düse umfassenden Gruppe.

6. Verfahren gemäß Anspruch 1, wobei die Polymermasse hergestellt wird, indem ein Lösemittel zu einer mittels Massepolymerisation oder Lösungspolymerisation erhaltenen Polymermasse hinzugegeben wird.

7. Verfahren zur Reinigung eines Polymeren durch Abtrennen und Entfernen flüchtiger Komponenten aus einer Polymermasse, welche die flüchtigen Komponenten enthält, das folgendes umfaßt:
(a) einen Schritt des Erhitzens der Polymermasse, die mindestens ein aus der Methanol und Aceton umfassenden Gruppe gewähltes Lösemittel enthält, auf eine Temperatur von 120 - 270°C mittels einer Heizvorrichtung, wobei der Innendruck am Einlaß der Heizvorrichtung mindestens 14,71 bar (15 kg/cm²) beträgt;
(b) einen Schritt des Ablassens der erhitzten Polymermasse in einen Tank, in dem der Druck bei 0,304 - 1,925 bar (0,3 - 1,9 atm) gehalten wird, und des anschließenden Abtrennens und Auffangens des Großteils der flüchtigen Komponenten;
(b') einen Schritt der Einführung eines Inertgases in die Polymermasse vor dem Erwärmen oder unter Erwärmung, oder in die Nähe der Polymermasse, welche in den Tank abgeführt wird, und
(c) einen Schritt des Einspeisens der erhaltenen Polymermasse in einen Entgasungsextruder, in dem die Temperatur auf 180 - 270°C eingestellt ist, und der Druck in dem Entgasungsabschnitt auf 0,001333 - 0,5333 bar (1 - 400 Torr) eingestellt ist, und des anschließenden Extrudierens derselben, um den Gehalt der verbleibenden flüchtigen Komponenten in der Masse auf 1 Gew.-% oder weniger zu senken.

8. Verfahren gemäß Anspruch 7, wobei das Polymer in der Polymermasse 75 bis 100 Gew.-% Methylmethacrylat als Monomerkomponente, oder 30 bis 74 Gew.-% Methylmethacrylat und 70 bis 26 Gew.-% Styrol als Monomerkomponenten beinhaltet.

9. Verfahren gemäß Anspruch 7, wobei die Polymermasse Methanol enthält.

10. Verfahren gemäß Anspruch 7, wobei das einzuführende Inertgas Stickstoff ist.

11. Verfahren gemäß Anspruch 7, wobei die Polymermasse auf eine Temperatur von 150 - 250°C erhitzt wird und dann durch eine Ausspüldüse in einen Tank abgeführt wird, in dem der Druck bei 0,507 - 1,520 bar (0,5 - 1,5 atm) gehalten wird.

12. Verfahren gemäß Anspruch 11, wobei die Ausspüldüse, durch welche die Polymermasse abgeführt wird, aus der eine Strangdüse, ein Nadelventil, ein Düsenkopfventil, einen Abzugsstößel, eine Flachdüse, eine kreisförmige Düse und eine Blasdüse umfassenden Gruppe gewählt wird.

13. Verfahren gemäß Anspruch 7, wobei die Polymermasse hergestellt wird, indem ein Lösemittel zu einer mittels Massepolymerisation oder Lösungspolymerisation erhaltenen Polymermasse hinzugegeben wird.

## Revendications

1. Procédé de purification d'un polymère en séparant et en retirant les composants volatils à partir d'une composition polymère contenant des composants volatils qui comprend:
(a) une étape consistant à chauffer la composition polymère contenant au moins un solvant choisi dans le groupe formé par le méthanol et l'acétone, jusqu'à une température de 120 à 270°C au moyen d'un élément chauffant, étape dans laquelle la pression interne au niveau de l'entrée de l'élément chauffant est au moins de 14,71 bars (15 kg/cm²);
(b) une étape consistant à décharger la composition de polymère chauffée dans une cuve dans laquelle la pression est maintenue entre 0,304 et 1,925 bars (0,3 et 1,9 atm), puis à séparer et à recueillir la plus grande partie des composants volatils; et
(c) une étape consistant à introduire la composition polymère obtenue dans une extrudeuse à évent dans laquelle la température est fixée entre 160 et 280°C et la pression dans la partie évent est fixée entre 0,001333 et 0,5333 bars (1 et 400 torrs) puis à l'extruder afin de diminuer la teneur en composants volatils restant dans la composition jusqu'à 1% en poids ou moins.

2. Procédé selon la revendication 1 dans lequel le polymère dans la composition polymère comprend le méthacrylate de méthyle à raison de 75 à 100% en poids en tant que composant monomère, ou le méthacrylate de méthyle à raison de 30 à 74% en poids et le styrène à raison de 70 à 26% en poids en tant que composants monomères.

3. Procédé selon la revendication 1 dans lequel la composition polymère comprend le méthanol.

4. Procédé selon la revendication 1 dans lequel le polymère dans la composition polymère est chauffée jusqu'à une température de 150 à 250°C, puis déchargée à travers une buse d'évacuation dans une cuve dans laquelle la pression est maintenue entre 0,507 et 1,520 bars (0,5 et 1,5 atm).

5. Procédé selon la revendication 4 dans lequel la buse d'évacuation, à travers laquelle la composition polymère est déchargée, est choisie dans le groupe formé par une filière toronneuse, une vanne à pointeau, une vanne de tête-filière, un bouchon d'évent, une filière plate et une filière circulaire.

6. Procédé selon la revendication 1 dans lequel la composition polymère est préparée en ajoutant un solvant à une composition polymère obtenue par une polymérisation en masse ou une polymérisation en solution.

7. Procédé de purification d'un polymère en séparant et en retirant les composants volatils à partir d'une composition polymère, contenant les composants volatils, qui comprend:
(a) une étape consistant à chauffer la composition polymère contenant au moins un solvant choisi dans le groupe formé par le méthanol et l'acétone, jusqu'à une température de 120 à 270°C au moyen d'un élément chauffant; étape dans laquelle la pression interne au niveau de l'entrée de l'élément chauffant est d'au moins de 14,71 bars (15 kg/cm²);
(b) une étape consistant à décharger la composition de polymère chauffée dans une cuve dans laquelle la pression est maintenue entre 0,304 et 1,925 bars (0,3 et 1,9 atm), puis à séparer et à recueillir la plus grande partie des composants volatils; et
(b') une étape consistant à introduire un gaz inerte dans la composition de polymère avant de chauffer ou pendant le chauffage, ou dans le voisinage de la composition polymère qui est en cours de déchargement dans la cuve, et
(c) une étape consistant à introduire la composition polymère obtenue dans une extrudeuse à évent dans laquelle la température est fixée entre 180 et 270°C et la pression dans la portion d'évent est fixée entre 0,001333 et 0,5333 bars (1 et 400 torrs), puis à l'extruder afin de diminuer la teneur en composants volatils restant dans la composition jusqu'à 1% en poids ou moins.

8. Procédé selon la revendication 7 dans lequel le polymère dans la composition de polymère comprend le méthacrylate de méthyle à raison de 75 à 100% en poids en tant que composant monomère, ou le méthacrylate de méthyle à raison de 30 à 74% en poids et le styrène à raison de 70 à 26% en poids en tant que composants monomères.

9. Procédé selon la revendication 7 dans lequel la composition polymère contient le méthanol.

10. Procédé selon la revendication 7 dans lequel le gaz inerte à introduire est l'azote.

11. Procédé selon la revendication 7 dans lequel la composition polymère est chauffée jusqu'à une température de 150 à 250°C, puis déchargée à travers une buse d'évacuation dans une cuve dans laquelle la pression est maintenue entre 0,507 et 1,520 bars (0,5 et 1,5 atm).

12. Procédé selon la revendication 11 dans lequel la buse d'évacuation, à travers laquelle la composition polymère est déchargée, est choisie dans le groupe formé par une filière toronneuse, une vanne à pointeau, une vanne de tête-filière, un bouchon d'évent, une filière plate, une filière circulaire et une filière pour gonflage.

13. Procédé selon la revendication 7 dans lequel la composition polymère est préparée en ajoutant un solvant à une composition polymère obtenue par une polymérisation en masse ou une polymérisation en solution.
